(19) Europäisches Patentamt
European Patent Office
Office européen des brevets

(11) EP 2 261 273 B1

(12) # EUROPÄISCHE PATENTSCHRIFT

(45) Veröffentlichungstag und Bekanntmachung des Hinweises auf die Patenterteilung:
**16.11.2011 Patentblatt 2011/46**

(51) Int Cl.:
***C08G 77/04*** *(2006.01)* ***C08J 9/00*** *(2006.01)*
***C08L 83/04*** *(2006.01)*

(21) Anmeldenummer: **10160540.0**

(22) Anmeldetag: **21.04.2010**

(54) **Zusammensetzungen enthaltend Polyether-Polysiloxan-Copolymere**

Compounds containing polyether-polysiloxane copolymers

Compositions comprenant des copolymères de polyéther-polysiloxane

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.05.2009 DE 102009003274**

(43) Veröffentlichungstag der Anmeldung:
**15.12.2010 Patentblatt 2010/50**

(73) Patentinhaber: **Evonik Goldschmidt GmbH**
**45127 Essen (DE)**

(72) Erfinder:
- **Henning, Frauke**
**45130, Essen (DE)**
- **Schiller, Carsten**
**45470, Mülheim an der Ruhr (DE)**
- **Dudzik, Horst**
**45326, Essen (DE)**
- **Emmrich, Eva**
**45149, Essen (DE)**
- **Terheiden, Annegret**
**47058, Duisburg (DE)**
- **Glos, Martin**
**46325, Borken (DE)**
- **Knott, Wilfried**
**45355, Essen (DE)**
- **Eilbracht, Christian**
**44627, Herne (DE)**

(56) Entgegenhaltungen:
**US-A- 3 796 676**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 261 273 B1

## Beschreibung

Die vorliegende Erfindung betrifft Zusammensetzungen enthaltend Polyether-Siloxan-Copolymere, die auf verzweigten SiH-funktionellen Siloxanen basieren, wobei mindestens eines der Polyether-Siloxan-Copolymere einen Rest -OR8 mit R8 = Alkylrest mit 1 bis 10 Kohlenstoffatomen aufweist, der an ein Siliziumatom gebunden ist, Verfahren zur Polyurethanschaumherstellung, bei denen diese Zusammensetzungen als Schaumstabilisatoren eingesetzt werden, Polyurethanschäume, die diese Zusammensetzungen enthalten sowie die Verwendung dieser Polyurethanschäume.

Stand der Technik:

Bei der Herstellung von Polyurethanschäumen werden häufig Polyether-Polysiloxan-Copolymere eingesetzt, die in zwei Klassen von Stabilisatoren eingeteilt werden können. Seit langem sind Polyether-Polysiloxan-Copolymere bekannt, bei denen die Polyether über eine SiOC-Bindung an die Polysiloxankette geknüpft sind. Die Herstellung erfolgt durch Umsetzung von hydroxyfunktionellen Polyethern wahlweise mit Chlorsiloxanen in einer Substitutionsreaktion oder mit Alkoxysiloxanen in einer Umesterungsreaktion. Diese Produktgruppe zeichnet sich besonders vorteilhaft durch ein breites Verarbeitungsspiel und eine hohe Aktivität aus, d.h. in einem weiten Konzentrationsbereich des Stabilisators werden Polyurethanschaumstoffe mit feiner Zellstruktur, der gewünschten Offen-/Geschlossenzelligkeit und frei von Schaumdefekten erhalten. PU-Stabilisatoren der SiOC-Produktgruppe sind aufgrund dieser Eigenschaften breit in einer Vielzahl von Formulierungen einsetzbar. Nachteilig ist die eingeschränkte Hydrolysebeständigkeit der SiOC-Bindung, was dazu führt, dass die Stabilisatoren sowie insbesondere deren Abmischungen oder Formulierungen nicht lange gelagert werden können. Ein weiterer Nachteil der SiOC-Stabilisatoren ist ihre mäßige Löslichkeit in Polyolformulierungen, wodurch es zur Eintrübung oder gar zu Separationserscheinungen der vollständig formulierten Polyolrezeptur kommen kann. Dieses Problem tritt insbesondere bei Hartschaumanwendungen auf, bei denen vielfach eine Löslichkeit und Separationsbeständigkeit von vorformulierte Mischungen aus Polyolen, Katalysatoren, Wasser/Treibmitteln, dem Schaumstabilisator und ggf. weiteren Additiven, die als gebrauchsfertige Polyurethanschaum-Systeme vermarktet werden, gefordert wird.

Um der mangelnden Lagerstabilität zu begegnen, wurde eine zweite Klasse von Polyether-Polysiloxan-Copolymeren entwickelt, bei der die Polyether durch hydrolysestabile SiC-Bindungen an das Polysiloxan gebunden sind. Die Herstellung erfolgt mittels edelmetallkatalysierter Hydrosilylierung von Allylpolyethern mit Wasserstoffsiloxanen. PU-Stabilisatoren der SiC-Produktgruppe zeichnen sich zusätzlich zu ihrer sehr guten Lagerstabilität durch eine hohe Löslichkeit in Polyolformulierungen aus. Beim Einsatz in Heißweichschaum-Anwendungen ist das von SiOC-Stabilisatoren bekannte breite Verarbeitungsspiel jedoch nicht gegeben, denn die Einsatzmenge des Stabilisators muss innerhalb eines engen Bereichs konstant gehalten werden, um konstant gute Schaumeigenschaften zu erzielen.

Das Dokument US 3796676 bezieht sich auf Polysiloxane in PUR Schaumstabilisatoren und offenbart Polysiloxane mit einer Q Einheit und einem Polyether-Rest.

Aufgabe der vorliegenden Erfindung war deshalb die Bereitstellung eines Schaumstabilisators, der die Vorteile der SiOC- und der SiC-Schaumstabilisatoren in einem Produkt vereint, ohne die Nachteile der beiden Produktklassen zu Eigen zu haben. Gesucht ist ein Polyurethanschaumstabilisator, der vorzugsweise eine hohe Aktivität mit breitem Verarbeitungsspiel und eine hohe Alterungsbeständigkeit aufweist.

Überraschenderweise wurde nun gefunden, dass Zusammensetzungen gemäß Anspruch 1 diese Aufgabe lösen. Zusammensetzungen gemäß Anspruch 1 enthalten Poly-Organokieselsäurealkoxyester gemäß Formel 1. Dies ist für den Fachmann überraschend und nicht vorhersehbar, da Alkoxyesterfunktionen an einem organomodifizierten Polysiloxan meist durch hydrolytischen Abbau eine veränderliche Performance des Additivs bewirken, was die Lagerstabilität einschränkt.

Gegenstand der vorliegenden Erfindung ist deshalb eine Zusammensetzung gemäß Anspruch 1. Ebenfalls Gegenstand der vorliegenden Erfindung sind Polyurethanschäume und ein Verfahren zur Herstellung von Polyurethanschäumen, die die erfindungsgemäße Zusammensetzung aufweisen, bzw. bei dem die erfindungsgemäße Zusammensetzung eingesetzt wird. Außerdem ist Gegenstand der vorliegenden Erfindung die Verwendung der erfindungsgemäßen bzw. erfindungsgemäß hergestellten Polyurethanschäume. Weitere Gegenstände der Erfindung sind gekennzeichnet durch die nachfolgende Beschreibung und den Inhalt der Ansprüche/Unteransprüche.

Die erfindungsgemäße Zusammensetzung hat den Vorteil, dass sie lagerstabil ist und ihre Schaum-stabilisierenden Eigenschaften auch im Gemisch mit vorformulierten Polyolsystemen einschließlich Wasser und Katalysatoren über einen langen Zeitraum erhalten bleiben. Weiterhin weist die erfindungsgemäße Zusammensetzung eine hohe Aktivität als Schaumstabilisator bei gleichzeitig breitem Verarbeitungsspiel und eine gute Löslichkeit in Polyurethan-Systemen auf.

Das erfindungsgemäße Verfahren hat den Vorteil, dass vorformulierte Mischungen aus Polyolen, Katalysatoren, Wasser/Treibmitteln, dem Schaumstabilisator und ggf. weiteren Additiven, die als gebrauchsfertige Polyurethanschaum-Systeme vermarktet werden, die marktüblichen Lagerzeiten ohne Verschlechterung der Schaumeigenschaften überstehen. Beim Einsatz von SiOC-Stabilisatoren ist die Lagerfähigkeit durch hydrolytischen Abbau des Schaumstabilisators dagegen nicht gewährleistet. Ein weiterer Vorteil ist, dass sich Dosierungenauigkeiten des Stabilisators aufgrund des breiten Verarbeitungsspiels in der Regel nicht durch Verschlechterung der Schaumeigenschaften bemerkbar machen, was bei klassischen SiC-Stabilisatoren zu befürchten wäre.

Der erfindungsgemäße Polyurethanschaum hat den Vorteil, dass er konstant hohe Qualität, d.h. eine besonders feine Zellstruktur mit besonders wenig Schaumdefekten (Lunker, Risse, Verdichtungen) aufweist.

Die erfindungsgemäßen Zusammensetzungen, das Verfahren zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäßen Zusammensetzungen zeichnen sich dadurch aus, dass sie Verbindungen der Formel (I) enthalten.

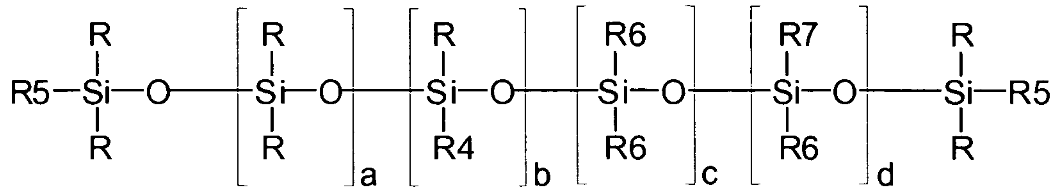

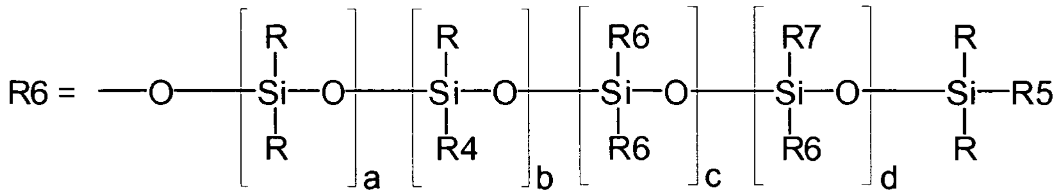

(I)

worin

a unabhängig voneinander 0 bis 500 ist,
b unabhängig voneinander 0 bis 60 ist,
c unabhängig voneinander 0 bis 10, vorzugsweise 0 oder > 0 bis 5, ist,
d unabhängig voneinander 0 bis 10, vorzugsweise 0 oder > 0 bis 5, ist,

mit der Maßgabe, dass pro Molekül der Formel (I) Σc + Σd >= 1 und dass die mittlere Anzahl Σd der T-Einheiten und die mittlere Anzahl Σc der Q-Einheiten pro Molekül jeweils nicht größer als 50, die mittlere Anzahl Σa der D-Einheiten pro Molekül nicht größer als 2000 und die mittlere Anzahl Σb der R4 tragenden Siloxy-Einheiten pro Molekül nicht größer als 100 ist,

R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,

R5 unabhängig voneinander R4, -OR8 oder R ist,

R4 unabhängig voneinander -OR8 oder ein organischer Rest ungleich R, bevorzugt

-OR8

$-CH_2-CH_2-CH_2-O-(CH_2-CH_2O-)_x-(CH_2-CH(R')\,O-)_y-R''$

$-CH_2-CH_2-O-(CH_2-CH_2O-)_{x-}(CH2_-CH(R')O-)_y-R''$

$-CH_2-R^{IV}$

$-CH_2-CH_2-(O)_{x'}-R^{IV}$

$-CH_2-CH_2-CH_2-O-CH_2-CH(OH)-CH_2OH$

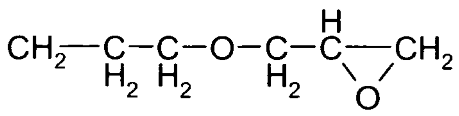

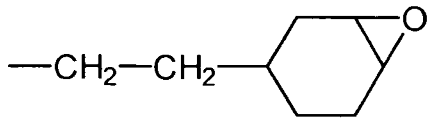

oder

$-CH_2-CH_2-CH_2-O-CH_2-C(CH_2OH)_2-CH_2-CH_3$, worin

- x 0 bis 100, vorzugsweise > 0, insbesondere 1 bis 50,
- x' 0 oder 1,
- y 0 bis 100, vorzugsweise > 0, insbesondere 1 bis 50,
- R' unabhängig von einander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes R4 und/oder eines Moleküls der Formel I untereinander verschiedene Substituenten R' vorliegen können, und
- R" unabhängig voneinander ein Wasserstoffrest oder eine Alkylgruppe mit 1 bis 4 C-Atomen, eine Gruppe -C(O)-R''' mit R''' = Alkylrest, eine Gruppe $-CH_2-O-R'$, eine Alkylarylgruppe, wie z. B. eine Benzylgruppe, die Gruppe -C(O) NH-R' bedeutet,
- $R^{IV}$ ein linearer, cyclischer oder verzweigter, gegebenenfalls substituierter, z. B. mit Halogenen substituierter, Kohlenwasserstoffrest mit 1 bis 50, vorzugsweise 9 bis 45, bevorzugt 13 bis 37 C-Atomen ist,
- R7 unabhängig voneinander R, R4, -OR8 und/oder ein mit Heteroatomen substituierter, funktioneller, organischer, gesättigter oder ungesättigter Rest ausgesucht aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,
- R8 unabhängig voneinander ein Wasserstoffrest oder ein Alkylrest mit 1 bis 10 Kohlenstoffatomen, vorzugsweise ein Methyl-, Ethyl- oder Isopropylrest,

mit der Maßgabe, dass mindestens ein Substituent aus R4, R5 und R7 nicht R ist und zumindest eine Verbindung der Formel (I) enthalten ist, bei der mindestens einer der Reste R4, R5 oder R7 ein Rest -OR8 ist und gemittelt über alle in der Zusammensetzung enthaltenen Verbindungen der Formel (I) höchstens 20 mol% der Reste R4, R5 oder R7 gleich -OR8 sind. Vorzugsweise sind gemittelt über alle in der Zusammensetzung enthaltenen Verbindungen der Formel (I) 0,1 bis 10 mol% der Reste R4, R5 oder R7 vom Typ -OR8. Der molare Anteil an Alkoxyresten -OR8 definiert sich nach Formel (I) als molarer Anteil der Reste -OR8 an der Summe der Reste R4, R5 und R7.

Die Reste R8 sind vorzugsweise zu mindestens 10 mol-%, bevorzugt zu zumindest 50 mol-%, besonders bevorzugt zu zumindest 90 mol-% und ganz besonders bevorzugt vollständig Alkylreste mit 1 bis 10 Kohlenstoffatomen. Besonders bevorzugt ist R8 somit kein Wasserstoff.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Die erfindungsgemäßen Zusammensetzungen können weitere Stoffe enthalten. Insbesondere können die erfindungsgemäßen Zusammensetzungen weitere Additive/Hilfsmittel, wie sie bei der Polyurethanschaum-Herstellung eingesetzt werden, aufweisen. Bevorzugte Additive/Hilfsmittel, die die erfindungsgemäßen Zusammensetzungen aufweisen können, sind vorzugsweise ausgewählt aus konventionellen SiOC- und SiC-Stabilisatoren, organischen Schaumstabilisatoren, Tensiden, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren, Polyolen, und/oder Puffersubstanzen.

Es kann außerdem vorteilhaft sein, wenn die erfindungsgemäße Zusammensetzung ein Lösungsmittel, insbesondere ein organisches Lösungsmittel, bevorzugt ein Lösungsmittel ausgewählt aus Glykolen, Alkoxylaten und Ölen

synthetischer und/oder natürlicher Herkunft enthält.

Die in der Zusammensetzung enthaltenen Verbindungen der Formel (I) können vorzugsweise dadurch erhalten werden, dass zunächst flüssige (betrachtet bei einer Temperatur von 25 °C und einem Druck von 101325 Pa), verzweigte SiH-funktionelle Siloxane hergestellt werden, in dem zunächst eine Mischung, enthaltend

a) ein oder mehrere SiH-funktionelle Siloxane,
b) ein oder mehrere SiH-Funktion-freie Siloxane und
c) ein oder mehrere Tetraalkoxysilane
und/oder
d) ein oder mehrere Trialkoxysilane

unter Zugabe von Wasser und in Anwesenheit von mindestens einem festen Brönstedt-sauren Katalysator, welcher ausgewählt ist aus den sauren Ionenaustauschern, in einem Verfahrensschritt umgesetzt wird. Die Umsetzung kann in Anlehnung an das in DE 102008041601 beschriebene Verfahren erfolgen. Auf das genannte Dokument wird ausdrücklich verwiesen.

Das Verfahren muss dabei so durchgeführt werden, dass die Umsetzung nicht vollständig ist, so dass verzweigte Siloxan-Produkte erhalten werden, die noch Alkoxygruppen aufweisen. Dies kann z. B. dadurch erreicht werden, dass die Umsetzung vor Erreichen des vollständigen Umsatzes abgebrochen wird, oder dass die Einsatzstoffe in unterstöchiometrischen Verhältnissen eingesetzt werden, so dass nicht alle Alkoxygruppen der Alkoxysilane umgesetzt werden können. Insbesondere wird ein molares Verhältnis von Wasser zu Alkoxygruppen von kleiner 1 zu 1 verwendet, besonders bevorzugt ist ein molares Verhältnis von Wasser zu Alkoxygruppen von kleiner 0,5 zu 1.

Das bevorzugte Verfahren verzichtet vorzugsweise vollständig auf die Gegenwart von Lösungsmitteln, die mit Wasser in gleichen Gewichtsteilen nicht ohne Phasentrennung mischbar sind. Insbesondere werden in dem Verfahren keine Alkane oder aromatische Verbindungen als Lösungsmittel eingesetzt.

Es kann vorteilhaft sein, wenn in dem Verfahren statt Wasser eine Mischung aus Wasser und einem oder mehreren, mit Wasser in gleichen Gewichtsteilen ohne Phasentrennung mischbaren organischen Lösungsmitteln zugegeben wird. Auf diese Weise kann eine bessere Kompatibilisierung und damit bessere Durchmischung des Wassers mit den Siloxanen und Silanen erreicht werden. Eine gute Durchmischung kann aber auch dadurch erreicht werden, dass das Wasser unter einer besonders guten mechanischen Durchmischung zugegeben wird oder der Mischung aus Silanen und Siloxanen in Form von Dampf zugeführt wird, z. B. durch Einperlen von Wasserdampf in die Mischung.

Als mit Wasser in gleichen Gewichtsteilen ohne Phasentrennung mischbare organische Lösungsmittel, werden vorzugsweise Alkohole, insbesondere Alkohole mit 1 bis 6 Kohlenstoffatomen, bevorzugt einwertige Alkohole und besonders bevorzugt Methanol oder Ethanol, insbesondere Ethanol eingesetzt. Vorzugsweise wird eine so große Menge dieses Lösungsmittels zugegeben, dass das Wasser ganz oder teilweise in der Reaktionsmischung homogenisiert ist. Wird eine Mischung von Wasser und einem entsprechenden Lösungsmittel, wie insbesondere Ethanol eingesetzt, beträgt das Gewichtsverhältnis von Wasser zu Lösungsmittel in dieser Mischung vorzugsweise von 1 zu 1 bis 10 zu 1, vorzugsweise 2 zu 1 bis 5 zu 1.

Vorzugsweise werden mit dem bevorzugten Verfahren in der Siloxankette verzweigte Wasserstoffsiloxane der allgemeinen Formel (II) hergestellt,

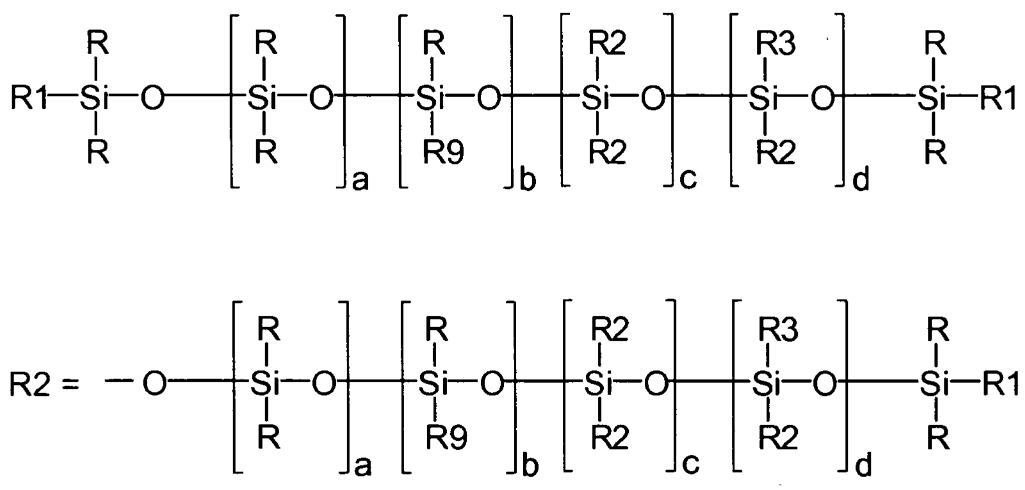

(II)

worin

- a unabhängig voneinander 0 bis 500, vorzugsweise 1 bis 300, bevorzugt 10 bis 200 ist
- b unabhängig voneinander 0 bis 60, vorzugsweise 0 bis 30, bevorzugt > 0, insbesondere 1 bi 15 ist,
- c unabhängig voneinander 0 bis 10, vorzugsweise 0 oder > 0 bis 5, ist,
- d unabhängig voneinander 0 bis 10, vorzugsweise 0 oder > 0 bis 5, bevorzugt 1 bis 5 ist,
- R mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- R1 unabhängig voneinander Wasserstoff, -OR8 oder R ist,
- R3 unabhängig voneinander Wasserstoff, -OR8, R oder ein mit Heteroatomen substituierter, funktioneller, organischer, gesättigter oder ungesättigter Rest, vorzugsweise ausgesucht aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
- R9 unabhängig voneinander H oder -OR8
- R8 unabhängig voneinander Wasserstoff oder ein Alkylrest mit 1 bis 10 Kohlenstoffatomen, vorzugsweise Methyl-, Ethyl oder Isopropylrest,

mit der Maßgabe, dass wenn b = 0 ist R1 = H ist, dass pro Molekül der Formel (II) $\Sigma c + \Sigma d >= 1$ ist und dass die mittlere Anzahl $\Sigma d$ der T-Einheiten und die mittlere Anzahl $\Sigma c$ der Q-Einheiten pro Molekül jeweils nicht größer als 50, vorzugsweise nicht größer als 20, bevorzugt nicht größer als 10, die mittlere Anzahl $\Sigma a$ der D-Einheiten pro Molekül nicht größer als 2000, vorzugsweise nicht größer als 1000 und bevorzugt nicht größer als 500 und die mittlere Anzahl $\Sigma b$ der R9 tragenden Siloxy-Einheiten pro Molekül nicht größer als 100, vorzugsweise nicht größer als 60 ist, und bei mindestens einer der erhaltenen Verbindungen der Formel (II) zumindest einer der Reste R1, R3 oder R9 ein Rest -OR8 ist und gemittelt über alle erhaltenen Verbindungen der Formel (II) höchstens 20 mol% der Reste R1, R3 oder R9 vom Typ -OR8 sind. Besonders bevorzugt ist a > 0.

Die Reste R8 sind vorzugsweise zu mindestens 10 mol-%, bevorzugt zu zumindest 50 mol-%, besonders bevorzugt zu zumindest 90 mol-% und ganz besonders bevorzugt vollständig Alkylreste mit 1 bis 10 Kohlenstoffatomen. Besonders bevorzugt ist R8 somit kein Wasserstoff.

Unter dem mittleren Verzweigungsgrad k wird im Rahmen der vorliegenden Erfindung das Verhältnis der Anzahl von M- und $M^H$-Einheiten zu T- und Q-Einheiten $(M + M^H) / (T+Q)$ verstanden. Die Bezeichnung der Einheiten entspricht der international anerkannten Nomenklatur, wie sie z. B. auch in Thieme Römpp Online, Georg Thieme Verlag, 2008 nachzulesen ist. Gemäß dieser Nomenklatur ist $M = R_3SiO_{1/2}$, $D = R_2SiO_{2/2}$, $T = RSiO_{3/2}$ und $Q = SiO_{4/2}$, wobei R organische Reste sind. Mit $M^H$ wird eine Einheit bezeichnet, bei der einer der Reste R ein Wasserstoffatom ist. Mit $D^H$ wird eine Einheit bezeichnet, bei der einer der Reste R ein Wasserstoffatom ist. Die Bestimmung des Verzweigungsgrads erfolgt durch in Verhältnis setzen der Flächenintegrale der Peaks in einem $^{29}$Si-NMR-Spektrum, die den jeweiligen Einheiten zugeordnet sind.

Die mit dem bevorzugten Verfahren erhaltenen verzweigten SiH-funktionellen Siloxane, vorzugsweise die verzweigten SiH-funktionellen Siloxane der Formel (II) können solche sein, bei denen die SiH-Funktionen rein endständig, rein seitenständig oder gemischt end- und seitenständig im Siloxan angeordnet sind.

Als SiH-funktionelle Siloxane können solche eingesetzt werden, bei denen die SiH-Funktionen rein endständig, rein seitenständig oder gemischt end- und seitenständig im Siloxan angeordnet sind. Als SiH-funktionelle Siloxane können z. B. lineare Polymethylhydrogensiloxane, wie beispielsweise HMS-993 der Firma Gelest Inc., lineare Polydimethylmethylhydrogensiloxane wie beispielsweise HMS-031 und/oder HMS-071 der Firma Gelest Inc., lineare $\alpha,\omega$-Dihydrogenpolydimethylsiloxane, wie beispielsweise 1,1,3,3-Tetramethyldisiloxan und/oder 1,1,3,3,5,5-Hexamethyltrisiloxan, höhermolekulare Oligomere, wie beispielsweise DMS-H03 und/oder DMS-H11 der Firma Gelest Inc., cyclische Polymethylhydrogensiloxane, wie beispielsweise Tetramethylcyclotetrasiloxan oder Pentamethylcyclopentasiloxan und cyclische Polydimethylmethylhydrogensiloxane wie beispielsweise Heptamethylcyclotetrasiloxan und/oder Nonamethylcyclopentasiloxan, oder Mischungen davon eingesetzt werden. Besonders bevorzugt werden als SiH-funktionelle Siloxane 1,1,3,3-Tetramethyldisiloxan, DMS-H03, HMS-993 (jeweils Firma Gelest Inc.) und Pentamethylcyclopentasiloxan eingesetzt.

Als SiH-Funktion-freie Siloxane können z. B. lineare Polydimethylsiloxane, wie beispielsweise Hexamethyldisiloxan oder cyclische Polydimethylsiloxane, wie beispielsweise Octamethylcyclotetrasiloxan und/oder Decamethylcyclopentasiloxan, eingesetzt werden. Vorzugsweise werden Hexamethyldisiloxan und Decamethylcyclopentasiloxan eingesetzt.

In einer bevorzugten Ausführungsform des bevorzugten Verfahrens werden ein oder mehrere Tetraalkoxysilane und ein oder mehrere Trialkoxysilane eingesetzt. In einer besonders bevorzugten Ausführungsform des bevorzugten Verfahrens werden ein oder mehrere Trialkoxysilane und keine Tetraalkoxysilane eingesetzt.

Als Tetraalkoxysilane können prinzipiell alle Tetraalkoxysilane, insbesondere Tetramethoxysilan, Tetraethoxysilan oder Tetraisopropoxysilan oder deren Kondensate eingesetzt werden. Als Tetraalkoxysilane können solche eingesetzt werden, bei denen die Alkoxyreste alle gleich, alle unterschiedlich oder teilweise gleich sind. Besonders bevorzugt ist die Verwendung von Tetraethoxysilan.

Als Trialkoxysilane können prinzipiell alle Trialkoxysilane eingesetzt werden, insbesondere solche, bei denen die Alkoxyreste alle gleich, alle unterschiedlich oder teilweise gleich sind. Besonders bevorzugt ist die Verwendung von Triethoxysilanen, vorzugsweise Alkyltriethoxysilane, wie beispielsweise Methyltriethoxysilan, Ethyltriethoxysilan, n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1,1,2,2-tetrahydrooctyltriethoxysilan, Nonafluoro-1,1,2,2-tetrahydrohexyltriethoxysilan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5-(Bicycloheptenyl)triethoxysilan, Aryltrialkoxysilane, insbesondere Aryltriethoxysilane, wie beispielsweise Phenyltriethoxysilan, (p-Chloromethyl)phenyltriethoxysilan, N-(3-Triethoxysilylpropyl)-4,5-dihydroimidazol oder Dihydro-3-[3-(triethoxysilyl)propyl]furan-2,5-dion, eingesetzt werden.

Vorzugsweise werden ausschließlich Edukte a) bis d) eingesetzt, die unter Normalbedingungen als Flüssigkeit vorliegen.

Die Anteile an kettenterminierenden Trialkylsiloxyeinheiten, insbesondere Trimethylsiloxyeinheiten (M-Einheiten) und/oder Dialkylhydrogensiloxyeinheiten, insbesondere Dimethylhydrogensiloxyeinheiten ($M^H$-Einheiten), Dialkylalkoxysiloxyeinheiten ($M^{OR}$-Einheiten), insbesondere Dimethylethoxysiloxyeinheiten ($M^{OEt}$-Einheiten), an kettenverlängernden Dialkylsiloxyeinheiten, insbesondere Dimethylsiloxyeinheiten (D-Einheiten) und/oder Alkylhydrogensiloxyeinheiten, insbesondere Methylhydrogensiloxyeinheiten ($D^H$-Einheiten), Alkylalkoxysiloxyeinheiten ($D^{OR}$-Einheiten), insbesondere Methylethoxysiloxyeinheiten ($D^{OEt}$-Einheiten), sowie an kettenverzweigenden Siloxyeinheiten, (Q-Einheiten) und gegebenen falls an verzweigenden Alkylsiloxyeinheiten (T-Einheiten) und/oder mit funktionellen Gruppen substituierten T-Einheiten können über einen weiten Bereich variiert werden. Das molare Verhältnis der Summe aus M-Einheiten und $M^H$-Einheiten zu Q-Einheiten beträgt vorzugsweise von 4:1 bis 1,8:1. Erhöht man die molare Menge der Q-Einheiten im Verhältnis zu den M- bzw. $M^H$-Einheiten über dieses Grenzverhältnis hinaus, können ggf. unerwünschte, makromolekulare stark vernetzte Gele bis Harze erhalten werden. Das molare Verhältnis der Summe aus M-Einheiten und $M^H$-Einheiten zu T-Einheiten beträgt vorzugsweise von 3:1 bis 1:1. Erhöht man die molare Menge der T-Einheiten im Verhältnis zu den M- bzw. $M^H$-Einheiten über dieses Grenzverhältnis hinaus, können ggf. unerwünschte, makromolekulare stark vernetzte Gele bis Harze erhalten werden.

Die Reaktionsmischung kann durch beliebiges Mischen der Komponenten erhalten werden. Vorzugsweise werden zunächst die SiH-funktionellen Siloxane, die SiH-Funktion-freien Siloxane, die Tetraalkoxysilane und gegebenenfalls die Trialkoxysilane bzw. die substituierten Trialkoxysilane gemischt.

Vorzugsweise wird nach dem Vermischen der Ausgangsstoffe, also der SiH-funktionellen Siloxane, der SiH-Funktion-freien Siloxane und der Tetra- und ggf. Trialkoxysilane, mindestens ein Brönstedt-saurer Katalysator zur Katalyse der Hydrolyse und Kondensation zugegeben. Der Katalysator kann der Reaktionsmischung ganz oder teilweise direkt zugegeben oder während der Reaktion in beliebiger Reihenfolge zudosiert werden.

Vorzugsweise werden zunächst die Ausgangsstoffe vermischt, dann der Katalysator zugegeben und anschließend das Wasser bzw. die wässrige Mischung zugefügt.

Als saure Ionenaustauscher können die nach dem Stand der Technik bekannten Ionenaustauscher eingesetzt werden. In dem bevorzugten Verfahren können sowohl natürliche Ionenaustauscher, wie beispielsweise Zeolithe, Montmorillonite, Attapulgite, Bentonite und andere Aluminiumsilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind. Insbesondere können saure Tonerden oder saure Ionenaustauscherharze, wie beispielsweise die unter den Markennamen Amberlite®, Amberlyst® oder Dowex® und Lewatit® bekannten Produkte eingesetzt werden. Besonders bevorzugt wird als saurer Ionenaustauscher ein sulfonsaures Ionenaustauscherharz eingesetzt.

Als saure Ionenaustauscher werden in dem bevorzugten Verfahren vorzugsweise solche eingesetzt, wie sie in EP 1 439 200 beschrieben sind. Diese Schrift und die in ihr als Stand der Technik zitierten Schriften werden hiermit als Referenz eingeführt und gelten als Teil des Offenbarungsgehaltes der vorliegenden Erfindung.

Es kann vorteilhaft sein, wenn in dem bevorzugten Verfahren als Katalysator mindestens ein fester saurer Ionenaustauscher (Katalysator 1) und mindestens ein weiterer, nicht fester Brönstedt-saurer Katalysator (Katalysator 2), insbesondere eine flüssige Säure eingesetzt wird. Als Katalysator 2 kann dabei eine Mineralsäure, vorzugsweise Schwefelsäure und/oder, vorzugsweise eine organische Sulfonsäure, vorzugsweise Trifluormethansulfonsäure eingesetzt werden. Diese Katalysatormischung wird vorzugsweise direkt der Reaktionsmischung zugegeben. Bevorzugt wird als Katalysator eine Mischung aus Trifluormethansulfonsäure und einem sulfonsauren Ionenaustauscherharz, vorzugsweise Lewatit® K 2621 (Bayer Material Science) eingesetzt. Bevorzugt weist die Katalysatormischung ein Massen-Verhältnis von Katalysator 1 zu Katalysator 2 von 10 zu 1 bis 100 zu 1 auf. Dieses Massenverhältnis ist insbesondere bei der Verwendung eines Lewatit®-Katalysators als Katalysator 1 und von Trifluormethansulfonsäure als Katalysator 2 bevorzugt.

Werden als Katalysator die zwei Katalysatoren 1 und 2 eingesetzt, so kann es vorteilhaft sein, wenn zu der Mischung an Ausgangsstoffen zunächst der Katalysator 2, vorzugsweise vollständig zugegeben wird, anschließend das Wasser zugefügt wird und erst nach der vorzugsweise vollständigen Zugabe von Wasser der Katalysator 1 zugegeben wird. Die Katalysatoren 1 und 2 können aber auch beide vor der Zugabe des Wassers den Ausgangsstoffen zugegeben werden.

In dem bevorzugten Verfahren wird dem Reaktionsgemisch vorzugsweise soviel an saurem Katalysator zugegeben, dass die Summe der eingesetzten sauren Katalysatoren von 0,01 bis 10 Gew.-% bezogen auf die Summe der Masse an eingesetzten Ausgangsstoffen (also Summe der SiH-funktionellen Siloxane, der SiH-Funktion-freien Siloxane, der Tetraalkoxysilane und gegebenenfalls der Trialkoxysilane) beträgt. Je nach Art und Konzentration des eingesetzten Katalysators können bestimmte Unterbereiche dieses Bereichs bevorzugt sein. Besonders bevorzugt ist beispielsweise die Verwendung von Trifluormethansulfonsäure in Mengen von 0,05 Gew.-% bis 0,5 Gew.-%. Wird als Katalysator ein Ionenaustauscherharz allein eingesetzt, so beträgt die eingesetzte Masse an Katalysator vorzugsweise von 0,5 bis 15 Gew.-%. Wird als Katalysator eine Kombination von Mineralsäure und/oder organischen Sulfonsäure mit einem Ionenaustauscherharz eingesetzt, so beträgt die Masse an eingesetztem Ionenaustauscherharz vorzugsweise von 0,5 bis 15 Gew.-%, bevorzugt von 0,5 bis 5 Gew.-%.

In dem bevorzugten Verfahren werden pro Mol eingesetztem Alkoxysilan vorzugsweise von 0,5 bis 30 Mol Wasser eingesetzt. Zur Hydrolyse und Kondensation werden bevorzugt 0,5 bis 6 Mol Wasser pro Mol Alkoxysilan eingesetzt. Das Wasser kann in einem Schritt zugegeben oder bevorzugt über einen längeren Zeitraum zudosiert werden Aufgrund der gewählten Wassermenge tritt eine Phasentrennung üblicherweise nicht auf.

Die Umsetzung wird im bevorzugten Verfahren vorzugsweise bei einer Temperatur von 0° C bis 100° C durchgeführt. Vorzugsweise erfolgt die Umsetzung (gleichzeitige Durchführung von Hydrolyse-, Kondensations- und Äquilibrierungsreaktionen) bei einer Temperatur von 20 bis 60 °C.

Nach Beendigung der Reaktion können die flüchtigen Nebenprodukte der Kondensation, z. B. durch schonende Vakuumdestillation entfernt werden. Falls erforderlich oder gewünscht kann eine Neutralisation, z. B. mit einem basischen Salz, vorzugsweise mit Natriumhydrogencarbonat, erfolgen.

Die so erhaltenen bevorzugten, in der Kette verzweigten Wasserstoffsiloxane sind vorzugsweise stabile, klare, farblose Flüssigkeiten, die bevorzugt keine oder zumindest nur geringe Anteile an flüchtigen niedermolekularen Verbindungen enthalten. Die in den via Eduktgemisch eingewogenen SiH-Äquivalenten, d.h. vor der Umsetzung gemessenen und die in den nach dem bevorzugten Verfahren hergestellten Wasserstoffsiloxanen (d.h. nach der Umsetzung) gemessenen SiH-Äquivalente sind innerhalb der Analysengenauigkeit übereinstimmend, was den weitestgehenden Erhalt der eingesetzten SiH-Funktionen belegt. Bevorzugte, in der Kette verzweigte Wasserstoffsiloxane weisen vorzugsweise mehr als 95 %, vorzugsweise mehr als 97 % des theoretisch möglichen Wasserstoffgehalts (Si-H-Wasserstoff) auf. Der Wasserstoffgehalt kann gasvolumetrisch bestimmt werden, nachdem der Wasserstoff durch Zersetzung des SiH-haltigen Materials in alkoholischer Alkali-Lösung quantitativ freigesetzt worden ist (siehe auch Reaktionsgleichung im Eaborn S. 200).

Durch das bevorzugte Verfahren können in der Siloxankette verzweigte Wasserstoffsiloxane, insbesondere solche gemäß Formel (I), hergestellt werden. Vorzugsweise weisen die in der Siloxankette verzweigten Wasserstoffsiloxane eine Viskosität, gemessen mit einem Rotationsviskosimeter der Marke Haake RV12 bei 25°C, von 10 bis 1000 mPa*s, bevorzugt von 20 bis 500 und besonders bevorzugt von 20 bis 250 mPa*s, auf. Die verzweigten Wasserstoffsiloxane enthalten im Mittel vorzugsweise 1 bis 10, bevorzugt 1 bis 5 verzweigende Einheiten (Q- und T-Einheiten). Die bevorzugten, in der Siloxankette verzweigten Wasserstoffsiloxane können zur Herstellung von in der Siloxankette verzweigten organomodifizierten Polysiloxanen verwendet werden.

Die in der Siloxankette verzweigten Wasserstoffsiloxane der Formel (II) können mit Verbindungen, die mindestens eine, vorzugsweise genau eine Doppelbindung pro Molekül aufweisen, durch Edelmetall-katalysierte, insbesondere Platin-katalysierte Hydrosilylierung umgesetzt werden. Dies ist für den Fachmann überraschend und nicht vorhersehbar, da die Alkoxyfunktionen am Siloxan bei der Hydrosilylierung weitgehend erhalten bleiben und nicht wie erwartet unter den Bedingungen der Edelmetallkatalyse bei erhöhter Temperatur zu Spaltungs- und Quervernetzungsreaktionen führen. Durch diese Umsetzung können die in der erfindungsgemäßen Zusammensetzung enthaltenen Copolymere der allgemeinen Formel (I) (siehe oben) erhalten werden.

Die edelmetallkatalysierte Hydrosilylierung der erfindungsgemäßen verzweigten Wasserstoffsiloxane kann z. B. wie im Stand der Technik, z. B. in EP 1 520 870, beschrieben durchgeführt werden. Die Schrift EP 1 520 870 wird hiermit als Referenz eingeführt und gilt als Teil des Offenbarungsgehaltes der vorliegenden Erfindung.

Als Verbindungen, die zumindest eine Doppelbindung pro Molekül aufweisen, können z. B. $\alpha$-Olefine, Vinylpolyoxyalkylene und/oder Allylpolyoxyalkylene eingesetzt werden. Vorzugsweise werden Vinylpolyoxyalkylene und/oder

Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugt werden als Verbindungen, die zumindest eine Doppelbindung pro Molekül aufweisen, die in den Beispielen genannten α-Olefine, Allylalkohol, 1-Hexenol, Vinylpolyoxyalkylene und/oder Allylpolyoxyalkylene sowie Allylglycidylether und Vinylcyclohexenoxid eingesetzt.

Die erfindungsgemäß beanspruchten Zusammensetzungen enthaltend organo- und insbesondere polyethermodifizierten, verzweigten Siloxane ($\Sigma c + \Sigma d \geq 1$) können allein bzw. auch in Abmischung mit anderen, unverzweigten organomodifizierten Siloxanen ($\Sigma c + \Sigma d = 0$) als wertvolle grenzflächenaktive Wirkstoffe Eingang in technische Anwendungen finden. Insbesondere gestattet die hier beschriebene Abmischung die Definition eines breiten Wirkspektrums solcher Tenside, die Eingang in die Herstellung von Polyurethanschäumen, z. B. als Schaumstabilisatoren, nehmen.

Es versteht sich von selbst, dass durch das Abmischen der beanspruchten organo- und insbesondere polyethermodifizierten, verzweigten Siloxane ($\Sigma c + \Sigma d \geq 1$) mit unverzweigten Siloxanen Gemische erhalten werden können, die wertvolle grenzflächenaktive Wirkstoffe sind, die aber, je nach Mischungsverhältnis, in der Summe weniger als eine Verzweigungseinheit pro Molekül ($\Sigma c + \Sigma d < 1$) aufweisen können. Auch ist es selbstverständlich möglich, die erfindungsgemäß beanspruchten organo- und insbesondere polyethermodifizierten, verzweigten Siloxane ($\Sigma c + \Sigma d \geq 1$) mit SiOC-verknüpften Polyethersiloxanen und/oder Silizium-freien Verbindungen, wie z. B. Lösungsmitteln, insbesondere Glykolen oder Polyethern, organischen Schaumstabilisatoren und Tensiden, Nukleierungsmitteln, zellverfeinernden Additiven, Zellöffnern, Treibmitteln, Vernetzern, Emulgatoren, Flammschutzmitteln, Antioxidantien, Antistatika, Bioziden, Farbpasten, festen Füllstoffen, Aminkatalysatoren, Metallkatalysatoren, Polyolen, und/oder Puffersubstanzen in weiten Bereichen zu mischen. Auch solche Mischungen können wertvolle grenzflächenaktive Zusammensetzungen sein. Der per $^{29}Si$-NMR bestimmte mittlere molekulare Verzweigungsgrad ändert sich dabei naturgemäß nicht.

Die erfindungsgemäßen Zusammensetzungen können als oberflächenaktive Substanzen in allen Bereichen verwendet werden. Vorzugsweise werden die erfindungsgemäßen Zusammensetzungen in Polyurethanen verwendet. Bevorzugt werden die erfindungsgemäßen Zusammensetzungen in Polyurethanschäumen, insbesondere in Polyurethanhartschäumen, Polyurethanweichschäumen, viskoelastischen Schäumen, HR-Schäumen, halbharten Polyurethanschäumen, thermoverformbaren Polyurethanschäumen oder Integralschäumen, verwendet, besonders bevorzugt als Schaumstabilisator.

Die erfindungsgemäßen Zusammensetzungen werden vorzugsweise in dem erfindungsgemäßen Verfahren zur Herstellung von Polyurethanschaum, als Schaumstabilisator zugegeben. Bevorzugt wird soviel der Zusammensetzung zugegeben, dass der Massenanteil an Verbindungen der Formel (I) am fertigen Polyurethanschaum von 0,01 bis 10 Gew.-%, bevorzugt von 0,1 bis 3 Gew.-% beträgt.

Die erfindungsgemäßen Zusammensetzungen sind als Schaumstabilisatoren in den üblichen Formulierungen zur Herstellung von Polyurethan-Schaumstoffen, bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind alle mehrfunktionalen organischen Isocyanate, wie beispielsweise 4, 4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung sind alle organischen Substanzen mit mehreren gegenüber Isocyanaten reaktiven Gruppen, sowie deren Zubereitungen. Bevorzugte Polyole sind alle zur Herstellung von Polyurethan-Schaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Ein geeignetes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 80 bis 350. Bei einem Index von 100 reagieren damit alle Isocyanat-Gruppen ab.

Geeignete Katalysatoren im Sinne dieser Erfindung sind Substanzen, die die Gelreaktion (Isocyanat-Polyol),

die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen, wie Dibutylzinndilaurat oder Zinn-II-2-ethylhexanoat, und Kaliumsalze wie Kaliumacetat und Kalium-2-ethylhexanoat.

Geeignete Einsatzmengen richten sich nach dem Typ des Katalysators und liegen üblicherweise im Bereich von 0,05 bis 5 pphp (= Gewichtsteilen bezogen auf 100 Gewichtsteile Polyol) bzw. 0,1 bis 10 pphp für Kaliumsalze.

Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte typischerweise bei 1 bis 20 pphp, werden zusätzlich andere Treibmittel eingesetzt, verringert sich die Einsatzmenge auf üblicherweise 0,1 bis 5 pphp.

Geeignete physikalische Treibmittel im Sinne dieser Erfindung sind Gase, beispielsweise verflüssigtes $CO_2$, u n d leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoffhaltige Verbindungen wie Methylformiat und Dimethoxymethan, oder Chlorkohlenwasserstoffe, bevorzugt Dichlormethan und 1,2-Dichlorethan.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure.

Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der erfindungsgemäßen Formulierungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Ein Spezialfall stellen die 1- und 1,5-Komponenten-Dosenschäume dar, bei denen ein Polyurethan-Präpolymer eingesetzt wird. Auch in dieser Anwendung können die erfindungsgemäßen Zusammensetzungen als Schaumstabilisator eingesetzt werden.

Die erfindungsgemäßen Polyurethanschäume zeichnen sich dadurch aus, dass sie eine erfindungsgemäße Zusammensetzung aufweisen bzw. enthalten. Vorzugsweise beträgt der Massenanteil an Verbindungen der Formel (I) am fertigen Polyurethanschaum von 0,01 bis 10 Gew.-%, bevorzugt von 0,1 bis 3 Gew.-%.

Die erfindungsgemäßen Polyurethanschäume können z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäßen Polyurethanschäume können z. B. als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele:**

Der Anteil an Alkoxyresten -OR8 definiert sich nach Formel (I) als Anteil -OR8 an der Summe der Reste R4, R5 und R7. Die Bestimmung des molaren Anteils an Alkoxyresten -OR8 erfolgte mittels ins Verhältnis setzen der jeweiligen Flächenintegrale eines $^{29}$Si-NMR-Spektrums. Es kann wahlweise das Spektrum des Endproduktes (Formel (I)) oder des als Vorstufe dienenden Wasserstoffsiloxans (Formel (II)) herangezogen werden, da die Alkoxyreste während der Hydrosilylierung weitestgehend erhalten bleiben. Die dem Fachmann geläufige $^{29}$Si-NMR-Messung ist auf Stufe

des Wasserstoffsiloxans von höherer Genauigkeit aufgrund der geringeren Verdünnung des Silikonteils. Die hier offenbarten Strukturen wurden durch Messung des Wasserstoffsiloxans und ins Verhältnis setzen der entsprechenden Integrale ermittelt.

**Beispiele 1 bis 7: Herstellung erfindungsgemäßer Zusammensetzungen**

Mit Hilfe des in dieser Schrift und des in den noch unveröffentlichten Patentanmeldungen DE 102008041601 und DE 102007055485.2 beschriebenen Verfahrens wurden die Wasserstoffsiloxane hergestellt. Die Einsatzmengen der Siloxan- und Silanedukte wurden gemäß den in der jeweiligen Beispielrezeptur erforderlichen Anteilen monomerer Siloxy-Einheiten berechnet. Die Herstellung erfolgte verfahrensanalog zu Beispiel 1 aus DE 102008041601. Damit die Umsetzung nicht zu 100 % erfolgte, wurde die Wassermenge stöchiometrisch bemessen. Statt einem Äquivalent Wasser pro silan-gebundenem Alkoxyäquivalent wurden jeweils maximal 0,5 Äquivalente Wasser pro silan-gebundenem Alkoxyäquivalent eingesetzt. Da bei der Zudosage von Kleinstmengen über einen Tropftrichter ein Rückhalt von Substanz an der benetzten Glaswand oder dem gefetteten Glashahn nicht ohne unerwünschten, zusätzlichen Lösungsmitteleinsatz zu vermeiden ist, sind die realen Wassermengen im Kolben auch bei stöchiometrischer Ansatzberechnung geringfügig substöchiometrisch.

In einem zweiten Schritt wurden diese Wasserstoffsiloxane durch Hydrosilylierung mit den in Tabelle 1 angegebenen Allylpolyethern zu Verbindungen gemäß Formel I umgesetzt. Die Herstellung erfolgte verfahrensanalog zu Beispiel 7 aus DE 1020070554852 und damit übereinstimmend mit dem Stand der Technik zur Herstellung von SiC-verknüpften Polyethersiloxanen, wie er beispielsweise auch in der EP 1520870 beschrieben ist.

Tabelle 1: Zur Herstellung der Verbindungen in Tabelle 2 verwendete Allylpolyether (EO: Ethylenoxid, PO: Propylenoxid)

| Polyether | Mol-gewicht | Starter | Endgruppe | Anteil EO | Anteil PO |
|---|---|---|---|---|---|
| PE 1 | 600 g/mol | Allylalkohol | Hydroxyfunktion | 100 | 0 |
| PE 2 | 1500 g/mol | Allylalkohol | Hydroxyfunktion | 40 | 60 |
| PE 3 | 1500 g/mol | Allylalkohol | Methoxyfunktion | 40 | 60 |
| PE 4 | 400 g/mol | Allylalkohol | Methoxyfunktion | 100 | 0 |
| PE 5 | 900 g/mol | Allylalkohol | Methoxyfunktion | 74 | 26 |
| PE 6 | 4000 g/mol | Allylalkohol | Methoxyfunktion | 40 | 60 |

Die Struktur der erhaltenen Verbindung kann Tabelle 2 entnommen werden. Die in Tabelle 2 aufgeführten Parameter beziehen sich auf die oben genannte Formel (I).

Tabelle 2: Zusammensetzungen der Beispiele 1 bis 7 enthaltend Verbindungen der Formel (I)

| Bsp. | R | Σa | R5 | OR8-Anteil [mol-%] | R7 | Σc | Σd | Σb | R4 |
|---|---|---|---|---|---|---|---|---|---|
| 1 | CH3 | 69 | PE 1, OR8 | 4,9 | CH3 | 0 | 4,5 | << 1 | OR8 |
| 2 | CH3 | 52 | PE 1, OR8 | 3,9 | CH3 | 0 | 3,3 | << 1 | OR8 |
| 3 | CH3 | 68 | PE 1, OR8 | 1,5 | CH3 | 0 | 5 | << 1 | OR8 |
| 4 | CH3 | 68 | PE 2, OR8 | 1,5 | CH3 | 0 | 5 | << 1 | OR8 |
| 5 | CH3 | 68 | PE 3, OR8 | 1,5 | CH3 | 0 | 5 | << 1 | OR8 |
| 6 | CH3 | 2 | R, OR8 | 1,5 | Phenyl | 0 | 1 | << 1 | OR8 |
| 7 | CH3 | 2 | R, PE 4, OR8 | 1,5 | Phenyl | 0 | 1 | << 1 | OR8 |
| 8 | CH3 | 68 | PE-Mix*, OR8 | 1,5 | CH3 | 0 | 5 | << 1 | OR8 |
| * Gemisch bestehend aus 12,4 Gew.-% PE 3, 13,1 Ges.-% PE 5 und 74,5 Ges.-% PE 6. | | | | | | | | | |

**Verschäumungsbeispiele**

In den nachfolgend beschriebenen Verschäumungsbeispielen wurden als nicht erfindungsgemäße Zusammensetzungen (Schaumstabilisatoren) die in Tabelle 3 angegebenen Produkte eingesetzt, die bei der Evonik Goldschmidt GmbH (Evonik) zu beziehen sind.

Tabelle 3: nicht erfindungsgemäße Vergleichsbeispiele

| Produktname | Hersteller | Strukturtyp |
|---|---|---|
| TEGOSTAB® B 1048 | Evonik | SiOC, verzweigtes Siloxan |
| TEGOSTAB® BF 2270 | Evonik | SiOC, verzweigtes Siloxan |
| TEGOSTAB® B 8404 | Evonik | SiC, lineares Siloxan |
| TEGOSTAB® B 8870 | Evonik | SiC, lineares Siloxan |
| TEGOSTAB® B 8871 | Evonik | SiC, lineares Siloxan |
| TEGOSTAB® B 8724 LF2 | Evonik | lineares Siloxan |
| TEGOSTAB® B 8726 LF2 | Evonik | SiC, lineares Siloxan |

**Beispiel 8: Anwendungsgebiet Hartschaum-Paneel und Dämmplatte**

Es wurden 2 verschiedene, für diese Einsatzgebiete abgestimmte Formulierungen, deren Zusammensetzung in Tabelle 4 angegeben ist, verwendet.

Tabelle 4: Formulierungen zu Hartschaum-Paneel / Dämmplatte in Massenteilen

| Formulierung | A: PUR Paneel | B: PIR Dämmplatte |
|---|---|---|
| Polyol | Polyetherpolyol-Blend 70 Teile | Stepanpol PS 2352* 100 Teile |
| Tris(1-chlor-2-propyl)phosphat | 30 Teile | 15 Teile |
| N,N,N',N",N"-Pentamethyldiethylentriamin | 0,2 Teile | 0,2 Teile |
| N,N-Dimethylcyclohexylamin | 2,0 Teile | - |
| Kaliumoctoat (75 Gew.-% in Diethylenglycol) | - | 4,0 Teile |
| Wasser | 1,0 Teile | 0,4 Teile |
| n-Pentan | 6,0 Teile | 20 Teile |
| Stabilisator | 2,0 Teile | 2,0 Teile |
| | | |
| Desmodur 44V20L** | 140 Teile | 200 Teile |
| * Polyesterpolyol der Firma Stepan<br>** polymeres MDI der Firma Bayer, 200 mPa*s, 31,5% NCO, Funktionalität 2,7 | | |

Zunächst wurde aus Polyol, Flammschutzmittel, Katalysatoren und Wasser ein Masterbatch beider Systeme angesetzt und jeweils in 6 gleiche Teile aufgeteilt. Je 2 davon wurden mit der entsprechenden Menge des erfindungsgemäßen Schaumstabilisators, 2 weitere mit einem konventionellen SiOC-Schaumstabilisator (nicht erfindungsgemäßes Vergleichsbeispiel) und die beiden letzten mit einem konventionellen linearen SiC-Schaumstabilisator (nicht erfindungsgemäßes Vergleichsbeispiel) versetzt. Je System wurde ein Satz bestehend aus 3 Proben mit den unterschiedlichen Stabilisatoren direkt nach dem Anmischen verschäumt. Der zweite Satz wurde zur Simulation einer längeren Lagerzeit einer beschleunigten Alterung bei 70 °C für eine Woche unterzogen und danach verschäumt. So ergibt sich je System und Stabilisator ein Datensatz frische und ein weiterer für gealterte Proben.

Die Durchführung der Vergleichsverschäumungen erfolgte im Handmischverfahren. Dazu wurde die wie beschrieben mit Stabilisator zubereitete Polyol-Rezeptur in einen Becher eingewogen, die erforderliche Menge Treibmittel zugegeben und mit einem Tellerrührer (6 cm Durchmesser) 30 s bei 1000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 50 °C

thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag.

Einen Tag nach der Verschäumung wurden die Schaumstoffe analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Wärmeleitzahl wurde an 2.5 cm dicken Scheiben mit einem Gerät vom Typ Hesto λ Control bei Temperaturen an Probenunter- und -oberseite von 10 °C und 36 °C gemessen. Der prozentuale Volumenanteil an geschlossenen Zellen wurde mit einem Gerät vom Typ AccuPyc 1330 der Firma Micromeritics bestimmt. Die Stauchhärten der Schaumstoffe wurden an würfelförmigen Probekörpern mit 5 cm Kantenlänge nach DIN 53421 bis zu einer Stauchung von 10 % gemessen (angegeben ist die in diesem Messbereich maximal aufgetretene Druckspannung). Es wurden jeweils mehrere Probekörper in Steigrichtung des Schaums belastet. Die Ergebnisse dieser Test sind in Tabelle 5 zusammengestellt.

Tabelle 5: Ergebnisse zu Beispiel 8

| Stabilisator | Defekte oben/unt en/ innen | Zellen/ cm | λ-Wert [mW/m*K] | Geschlossenzelligkeit [%] | Stauchhärte [kPa] | Dichte [kg/m$^3$] gesamt/ Kern |
|---|---|---|---|---|---|---|
| Formulierung A (PUR-Paneel) frisch nach der Zubereitung verschäumt | | | | | | |
| B 1048 | 7/9/7 | 41-45 | 22,2 | 93.5 | 180 | 42,5 / 38,7 |
| B 8404 | 7/8/7 | 41-45 | 22,5 | 92,4 | 185 | 43,1 / 38,9 |
| Formulierung A (PUR-Paneel) nach Alterung (eine Woche bei 70°C) verschäumt | | | | | | |
| Gem. Bsp. 5 | 8/9/7 | 46-50 | 22,2 | 92,1 | 170 | 42,8 / 38,6 |
| B 1048 | 5/4/6 | 31-35 | 24,7 | 79,4 | 200 | 42,5 / 38,7 |
| B 8404 | 7/8/7 | 41-45 | 22,6 | 91,9 | 180 | 43,1 / 38,9 |
| Formulierung B (PIR Dämmplatte) frisch nach der Zubereitung verschäumt | | | | | | |
| Gem. Bsp. 1 | 6/8/9 | 46-50 | 22,6 | 94,0 | 165 | 38,4 / 35,0 |
| B 1048 | 6/8/9 | 46-50 | 22,5 | 93,1 | 165 | 38,3 / 35,1 |
| B 8404 | 6/8/8 | 41-45 | 22,9 | 91,9 | 175 | 37,9 / 35,1 |
| Formulierung B (PIR Dämmplatte) nach Alterung (eine Woche bei 70'C) verschäumt | | | | | | |
| Gem. Bsp. 1 | 6/7/9 | 46-50 | 22,5 | 91,2 | 170 | 38,5 / 35,2 |
| B 1048 | 4/4/5 | 26-30 | 25,5 | 82,5 | 140 | 39,2 / 37,0 |
| B 8404 | 6/8/9 | 41-45 | 22,7 | 93,1 | 170 | 38,3 / 35,0 |

Die Daten de Tabelle 5 zeigen, dass mit dem erfindungsgemäßen Schaumstabilisator Hartschaumstoffe guter Qualität erhalten werden können. Die vergleichsweise hohe Feinzelligkeit der erfindungsgemäß hergestellten Hartschaumstoffe bestätigt die hohe Aktivität der erfindungsgemäßen Schaumstabilisatoren, die auch nach der Alterung der fertig formulierten Polyolkomponente mit Stabilisator erhalten bleibt. Bei dem nicht erfindungsgemäßen Vergleichsbeispiel mit einem zum Stand der Technik zählenden SiOC-Schaumstabilisator ist dagegen eine deutliche Verschlechterung der Schaumqualität nach Alterung der Polyolkomponente zu erkennen.

**Beispiel 9: Anwendungsgebiet Isolation von Kühlmöbeln**

Für den anwendungstechnischen Vergleich von erfindungsgemäßen und konventionellen Schaumstabilisatoren wurden die in Tabelle 6 angegebenen Schaumformulierung verwendet.

Tabelle 6: Formulierungen zu Kühlschrankisolation

| Komponente | Einsatzmenge |
|---|---|
| Daltolac R 471*<br>N,N-Dimethylcyclohexylamin<br>Wasser<br>cyclo-Pentan<br>Stabilisator<br><br>Desmodur 44V20L** | 95 g (100 Teile)<br>1,4 g (1,5 Teile)<br>2,5 g (2,6 Teile)<br>12,4 g (13,1 Teile)<br>1,4 g (1,5 Teile)<br><br>188,6 g (198,5 Teile) |
| * Polyetherpolyol der Firma Huntsman<br>** polymeres MDI der Firma Bayer, 200 mPa*s, 31,5% NCO, Funktionalität 2,7 | |

Die Durchführung der Vergleichsverschäumungen erfolgte im Handmischverfahren. Dazu wurden Polyol, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 45 °C thermostatisierte Aluminiumform von 145 cm x 14 cm x 3.5 cm Größe überführt, welche im Winkel von 10° (entlang der 145 cm messenden Seite) geneigt und mit Polyethylenfolie ausgekleidet war. Die Schaumformulierung wurde dabei an der tiefer liegenden Seite eingetragen, so dass der expandierende Schaum die Form im Eingussbereich ausfüllt und in Richtung der höher liegenden Seite aufsteigt. Die Einsatzmenge an Schaumformulierung war dabei so bemessen, dass sie unterhalb der zur Mindestbefüllung der Form notwendigen Menge lag. Die Länge des nach Aushärtung erhaltenen Schaumstoff-Formteils kann somit - normiert auf das Gewicht - als Maß für die Volumenausbeute herangezogen werden. Nach 10 min wurden die Schaumstoffe entformt und analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Fließlänge (als Maß für die Volumenausbeute) wurde durch Ausmessen des Schaumstoff-Formteils bestimmt und zum besseren Vergleich gemäß folgender Formel auf ein Standardgewicht von 260 g und Normdruck umgerechnet:

$$\text{Reduzierte Fließlänge} = \text{Schaumlänge} * 260\text{g} * \text{Luftdruck} / (\text{Schaumgewicht} * 1013\ \text{mbar})$$

Alle in Beispiel 9 verwendeten Schaumstabilisatoren und die zugehörigen Verschäumungsergebnisse sind in Tabelle 7 zusammengestellt.

Tabelle 7: Ergebnisse zu Beispiel 9 (Kühlschrankisolation)

| Zellstabilisator | Schaumqualität hinsichtlich Defekten | | | Zellfeinheit [Zellen/cm] | Red. Fließlänge [cm] |
|---|---|---|---|---|---|
| | Oberseite | Unterseite | Innen | | |
| Gem. Bsp. 4 | 5 | 5 | 7 | 36-40 | 129,9 |
| TEGOSTAB B 1048 | 5 | 5 | 7 | 36-40 | 129,1 |
| TEGOSTAB B 8404 | 4 | 5 | 7 | 36-40 | 128,5 |

Die Ergebnisse belegen, dass mit den erfindungsgemäßen Zubereitungen Hartschaumstoffe für Kühlschrankanwendungen hergestellt werden können. Dabei werden hinsichtlich Oberflächenqualität und Zellfeinheit gleich gute Ergebnisse, hinsichtlich Fließfähigkeit bzw. Volumenausbeute sogar bessere Ergebnisse als mit Schaumstabilisatoren gemäß dem Stand der Technik erzielt.

**Beispiel 10: Anwendungsgebiet offenzelliger (Halb-)Hartschaum**

Für den anwendungstechnischen Vergleich von erfindungsgemäßen und konventionellen Schaumstabilisatoren bei offenzelligem Hartschaum wurde die in Tabelle 8 angegebenen Schaumformulierung verwendet.

Tabelle 8: Formulierungen zu offenzelligem (Halb-)Hartschaum

| Komponente | Einsatzmenge |
|---|---|
| Daltolac R 251* | 35 g |
| Voranol RN 490** | 35 g |
| Desmophen VP.PU 44WB03*** | 25 g |
| Dipropylenglycol | 5 g |
| N,N-Dimethylaminoethanol | 0,5 g |
| Triethylendiamin 33%ig in Dipropylenglycol | 0,5 g |
| Wasser | 4 g |
| TEGOSTAB B 8523‡ | 1 g |
| Stabilisator | 1 g |
| | |
| Desmodur 44V20L‡‡ | 134 g |

* Polyetherpolyol der Firma Huntsman
** Polyetherpolyol der Firma DOW
*** Polyetherpolyol der Firma Bayer
‡ Zellöffner der Firma Evonik Goldschmidt GmbH
‡‡ polymeres MDI der Firma Bayer, 200 mPa*s, 31,5% NCO, Funktionalität 2,7.

Die Durchführung der Vergleichsverschäumungen erfolgte im Handmischverfahren. Dazu wurden Polyole, Katalysatoren, Wasser, Zellöffner und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 5 s bei 3000 Upm verrührt und sofort in eine nach oben offene Holzkiste von 27 cm x 14 cm Grundfläche und 14 cm Höhe überführt, welche mit Papier ausgekleidet war.

Nach 10 min wurden die Schaumstoffe entformt und analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Der prozentuale Volumenanteil an offenen Zellen wurde mit einem Gerät vom Typ AccuPyc 1330 der Firma Micromeritics bestimmt.

Die verwendeten Schaumstabilisatoren und die zugehörigen Verschäumungsergebnisse sind in Tabelle 9 zusammengestellt.

Tabelle 9: Ergebnisse zu offenzelliger (Halb-)Hartschaum

| Zellstabilisator | Schaumqualität hinsichtlich Defekten | | | Zellfeinheit [Zellen/cm] | Offenzelligkeit [%] |
|---|---|---|---|---|---|
| | Oberseite | Unterseite | Innen | | |
| Gem. Bsp. 2 | Gut abgeblasen | 5 | 8 | 36-40 | 93,9 |
| TEGOSTAB B 8871 | Gut abgeblasen | 4 | 7 | 36-40 | 93,1 |

Die Ergebnisse belegen, dass mit den erfindungsgemäßen Schaumstabilisatoren offenzellige Hartschaumstoffe mit hoher Offenzelligkeit und vergleichsweise wenigen Schaumdefekten hergestellt werden können.

**Beispiel 11: Anwendungsgebiet Sprühschaum**

Für den anwendungstechnischen Vergleich von erfindungsgemäßen und konventionellen Schaumstabilisatoren wurden die in Tabelle 10 angegebenen Schaumformulierung eines rein Wasser-getriebenen Sprüh-Leichtschaums verwendet.

Tabelle 10: Formulierungen zu Sprühschaum

| Komponente | Einsatzmenge (Massenteile) |
|---|---|
| Rizinus-Öl | 25,0 Teile |
| Stepan PS 1922* | 7,5 Teile |
| Jeffol R-470 X** | 7,0 Teile |
| Tris(1-chlor-2-propyl)phosphat | 20,0 Teile |
| PHT-4-Diol*** | 10,0 Teile |
| Tegoamine BDE‡ | 3,0 Teile |
| Tegoamine 33‡ | 2,5 Teile |
| Tegoamine DMEA‡ | 3,0 Teile |
| Wasser | 19,0 Teile |
| Stabilisator | 3,0 Teile |
| | |
| Rubinate M‡‡ | 100 Teile |

* Polyesterpolyol der Firma Stepan
** Mannich-Basen-gestartetes Polyether-Polyol der Firma Huntsman
*** Flammschutzmittel der Firma Chemtura
‡ Amin-Katalysatoren der Firma Evonik Goldschmidt GmbH
‡‡ polymeres MDI der Firma Huntsman, 190 mPa*s, 31,2% NCO, Funktionalität 2,7

Die Durchführung der Vergleichsverschäumungen erfolgte im Handmischverfahren. Dazu wurden Polyole, Katalysatoren, Wasser, Flammschutzmittel und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 3 s bei 3000 Upm verrührt und sofort in eine nach oben offene Holzkiste von 27 cm x 14 cm Grundfläche und 14 cm Höhe überführt, welche mit Papier ausgekleidet war. Nach 10 min wurden die Schaumstoffe entformt und analysiert. Die Zellstruktur wurden subjektiv anhand einer Skala von 1 bis 10 beurteilt, wobei 10 einen sehr feinzelligen und ungestörten Schaum und 1 einen groben, extrem stark gestörten Schaum repräsentiert. Der prozentuale Volumenanteil an offenen Zellen wurde mit einem Gerät vom Typ AccuPyc 1330 der Firma Micromeritics bestimmt. Die Dichte wurde durch Abwiegen eines 10 cm x 10 cm x 10 cm großen Schaumwürfels bestimmt.

Alle verwendeten Schaumstabilisatoren und die zugehörigen Verschäumungsergebnisse sind in Tabelle 11 zusammengestellt.

Tabelle 11: Ergebnisse zu Sprühschaum (Beispiel 11)

| Stabilisator | Zellstruktur | Offenzelligkeit [%] | Dichte [kg/m$^3$] |
|---|---|---|---|
| Gem. Bsp. 4 | 9 | 86 | 8,5 |
| B 1048 | 7 | 88 | 11,1 |
| B 8589 | 8 | 85 | 9,3 |

Mit dem erfindungsgemäßen Schaumstabilisator wird die niedrigste Schaumdichte und die beste Zellstruktur bei gleich guter Offenzelligkeit erreicht, wodurch die hohe Aktivität der erfindungsgemäßen Schaumstabilisatoren zu

Ausdruck kommt.

**Beispiel 12: Anwendungsgebiet 1-Komponenten-Dosenschaum**

Für den anwendungstechnischen Vergleich von erfindungsgemäßen und konventionellen Schaumstabilisatoren wurden die in der nachfolgenden Tabelle 12 angegebenen Schaumformulierungen verwendet.

Tabelle 12: Formulierungen zu 1-K-Dosenschaum

| Komponente | Einsatzmenge (Massenteile) |
|---|---|
| Polyetherpolyol* | 24,5 Teile |
| Chlorparaffin | 10 Teile |
| 2,2'-Dimorpholinodiethylether | 0,3 Teile |
| L-6164** | 0,2 Teile |
| Stabilisator | 1 Teil |
| | |
| Desmodur 44V20L*** | 44 Teile |
| | |
| Dimethylether | 5 Teile |
| iso-Butan | 10 Teile |
| Propan | 5 Teile |
| * Glycerin-gestartet, rein Propylenoxid, 1000 g/mol, OHZ 168<br>** Zellöffner von Momentive Performance Materials<br>*** polymeres MDI der Firma Bayer, 200 mPa*s, 31,5% NCO, Funktionalität 2,7 | |

Zur Durchführung wurde in Beispiel 12 aus den ersten 4 Komponenten aus Tabelle 12 eine Vormischung hergestellt und in 6 Aerosoldosen gegeben. Zwei Dosen wurden mit einem erfindungsgemäßen Schaumstabilisator versetzt, zwei weitere mit einem konventionellen SiOC-Schaumstabilisator (nicht erfindungsgemäßes Vergleichsbeispiel) und die beiden letzten mit einem konventionellen linearen SiC-Schaumstabilisator (nicht erfindungsgemäßes Vergleichsbeispiel). Alle 6 Dosen wurden mit der formulierungsgemäßen Menge an Isocyanat versetzt und sofort durch Aufpressen eines für PU-Dosenschaum geeigneten Ventils verschlossen. Durch das Ventil wurden die Dosen mit dem Treibmittel befüllt und anschließend kräftig mit der Hand geschüttelt. Zur Bildung des Polyurethan-Präpolymers wurden die Dosen für 24 h bei Raumtemperatur gelagert. Ein Satz bestehend aus drei Dosen mit den drei unterschiedlichen Schaumstabilisatoren wurde dann mit Adapterröhrchen versehen und Schaum ausgetragen, indem Schaumstränge auf ein leicht angefeuchtetes Papier aufgetragen wurden. Nach dem Aushärten wurden die Schaumstränge zur Beurteilung der Zellstruktur aufgeschnitten. Die anderen 3 Dosen wurden 4 Wochen bei 50 °C gelagert und danach entsprechend ausgeprüft.

Alle verwendeten Schaumstabilisatoren und die zugehörigen Verschäumungsergebnisse sind in Tabelle 13 zusammengestellt.

Tabelle 13: Ergebnisse zu 1-K-Dosenschaum

| Stabilisator | Zellstruktur | Innenstörungen/ Lunker | Schrumpf |
|---|---|---|---|
| frisch nach der Zubereitung verschäumt | | | |
| Gem. Bsp. 5 | sehr fein, regelmäßig | kaum | dimensionsstabil |
| BF 2270 | sehr fein, regelmäßig | kaum | leichter Schrumpf |
| B 8870 | fein, regelmäßig | kaum | dimensionsstabil |
| nach Alterung (4 Wochen bei 50°C) verschäumt | | | |
| Gem. Bsp. 5 | sehr fein, regelmäßig | kaum | dimensionsstabil |

(fortgesetzt)

| Stabilisator | Zellstruktur | Innenstörungen/ Lunker | Schrumpf |
|---|---|---|---|
| BF 2270 | grob, unregelmäßig | große Lunker | dimensionsstabil |
| B 8870 | fein, regelmäßig | kaum | dimensionsstabil |

Es zeigt sich, dass mit dem erfindungsgemäßen Schaumstabilisator 1-K-Schaumstoffe hoher Qualität erhalten werden. Die vergleichsweise hohe Feinzelligkeit der erfindungsgemäß hergestellten Hartschaumstoffe bestätigt die hohe Aktivität der erfindungsgemäßen Schaumstabilisatoren, die auch nach der Alterung der Dosen erhalten bleibt. Bei dem nicht erfindungsgemäßen Vergleichsbeispiel mit einem zum Stand der Technik zählenden SiOC-Schaumstabilisator ist dagegen eine deutliche Verschlechterung der Schaumqualität nach Alterung zu erkennen, die möglicherweise auf einen Abbau des Stabilisators zurückgeführt werden kann.

**Beispiel 13: Anwendungsgebiet HR-Formschaum mit MDI**

Für den anwendungstechnischen Vergleich von erfindungsgemäßen und konventionellen Schaumstabilisatoren wurde nachfolgende Schaumformulierung verwendet (Angaben jeweils in Massenteilen).

100 Teile Desmephen VP.PU 21IK01, ein Polyol von Bayer Material Science, unterschiedliche Teile Siloxanzusammensetzung, wobei die Zusammensetzung aus einer 10 Gew.-%igen Lösung des entsprechenden Siloxans in einem Butanolgestarteten Polypropylenglykol der Molmasse 700 bestand, 3 Teile Wasser, 2 Teile Triethanolamin, 0,6 Teile TEGOAMIN® 33 und 0,2 Teile Diethanolamin und eine Mischung aus 18,5 Teilen polymeres MDI (Desmodur 44V20 von Bayer) und 27,7 Teilen TDI (T80 = 2,4- und 2,6-Toluylendiisocyanat-Isomerengemisch im Massen-Verhältnis 80:20).

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 40°C erwärmt war und ließ die Masse bei Formulierung für 10 Minuten aushärten. Anschließend wurden die Aufdrückkräfte gemessen. Hierbei wurden die Schäume 10 mal auf 50 % ihrer Höhe komprimiert. Hierbei ist der 1. Messwert (AD 1 in Newton) ein Maß für die Offenzelligkeit des Schaums. Anschließend wurde der Schaum (manuell) vollständig aufgedrückt um beim 11. Messwert (AD 11 in Newton) die Härte des aufgedrückten Schaums bestimmen zu können. Danach wurden die Schäume aufgeschnitten, um Haut und Randzone zu beurteilen und die Zellenzahl (ZZ) zu bestimmen. In der Tabelle 14 sind die Beispiele 13a bis 13c zusammengefasst. Es sind die Beurteilungen, Dosierung der Siloxanzusammensetzung in Teilen pro hundert Teilen Polyol (pphp) und das jeweils verwendete Siloxan aufgeführt.

Tabelle 14: Ergebnisse zu HR-Formschaum mit MDI (Beispiel 13)

| Beispiel | 13a | 13b | 13c |
|---|---|---|---|
| AD 1 | 1361 | 1296 | 1370 |
| AD 11 | 126 | 132 | 126 |
| ZZ | 9,5 | 10 | 10 |
| Haut | Gut | Gut | Gut |
| Randzone | Gut | Leicht gestört | Gut |
| Siloxan | Gem. Bsp. 6 | Gem. Bsp. 7 | B 8726 LF2 |
| Dosierung /pphp | 0,3 | 0,5 | 0,5 |

Die Ergebnisse zeigen, dass die erfindungsgemäßen Siloxane gemäß den Beispielen 6 und 7 geeignet sind um HR Formschaumstoffe für Automobilsitze unter Verwendung von MDI als Isocyanat zu stabilisieren. Hinsichtlich der Offenzelligkeit, der Randzonenstabilisierung und der Zellfeinheit werden gleich gute Ergebnisse erzielt im Vergleich zu einem konventionell eingesetzten Siloxan im Vergleichsbeispiel 13c.

**Beispiel 14: Anwendungsgebiet HR-Formschaum mit TDI**

Für den anwendungstechnischen Vergleich von erfindungsgemäßen und konventionellen Schaumstabilisatoren wurde folgende Schaumformulierung verwendet (Angaben in Massenteilen):

73 Teile Hyperlite 1629, ein Polyol von Bayer Material Science, 27 Teile Hyperlite 1650, ein Polymerpolyol von Bayer Material Science, unterschiedliche Teile Siloxanzusammensetzung, bestehend aus einer 10 Gew.-%igen Lösung des entsprechenden Siloxans in einem Butanol-gestarteten Polypropylenglykol der Molmasse 700, 4 Teile Wasser, 0,9 Teile Diethanolamin, 0,4 Teile TEGOAMIN® 33, 0,06 Teile TEGOAMIN® BDE, 0,6 Teile Glycerin und 46 Teile Isocyanat (T80 = 2,4- und 2,6-Toluylendiisocyanat-Isomerengemisch im Massen-Verhältnis 80:20).

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 65°C erwärmt war und ließ die Masse für 6 Minuten aushärten. Anschließend wurden die Aufdrückbarkeit (AD) des Schaumes mit Werten von 1-10 beurteilt, wobei der Wert 1 für einen sehr offenzelligen und der Wert 10 für einen sehr geschlossenzelligen Schaum steht. Danach wurden die Schäume aufgeschnitten um die Qualität (Haut und Randzone) zu beurteilen und die Zellenzahl (ZZ) zu bestimmen. In Tabelle 15 sind die Beispiele 14a bis 14c zusammengefasst. Es sind die Beurteilungen, das jeweils verwendete Siloxan und die Dosierung der Siloxanzusammensetzung in pphp aufgeführt.

Tabelle 15: Ergebnisse zu HR-Formschaum mit TDI (Beispiel 14)

| Beispiel | 14a | 14b | 14c |
|---|---|---|---|
| AD 1 | 1954 | 1825 | 1990 |
| AD 11 | 158 | 155 | 160 |
| ZZ | 11 | 11 | 11 |
| Haut | Gut | Gut | Gut |
| Randzone | Gut | Gut | gut |
| Siloxan | Gem. Bsp. 6 | Gem. Bsp. 7 | B 8724 LF2 |
| Dosierung /pphp | 1,0 | 0,5 | 0,8 |

Die Ergebnisse zeigen, dass die erfindungsgemäßen Siloxane gemäß den Beispielen 6 und 7 in höheren Konzentrationen ebenfalls für die Verwendung als Stabilisatoren in HR Formschaumstoffe für Automobilsitze unter Verwendung von TDI als Isocyanat geeignet sind. Hinsichtlich der Offenzelligkeit, der Randzonenstabilisierung und der Zellenzahl werden gleich gute Ergebnisse erzielt im Vergleich zu einem wie in Vergleichsbeispiel 14c eingesetztem konventionellem Siloxan.

**Beispiel 15: Anbwendungsgebiet Weichblockschaum**

Für den anwendungstechnischen Vergleich von erfindungsgemäßen und konventionellen Schaumstabilisatoren wurde ein Polyurethanweichschaum in einer 27 cm x 27 cm großen offenen Holzkiste mit einer Wandhöhe von 27 cm durch Verschäumung einer Polyurethanformulierung mit folgenden Bestandteilen produziert Angaben jeweils in Massenteilen):

| | |
|---|---|
| 100 Teile | eines trifunktionellen Polypropylenglykols der OH-Zahl 48 |
| 5,0 Teile | Wasser |
| 0,15 Teile | Aminkatalysator* |
| 0,23 Teile | Zinn-Katalysator** |
| 5,0 Teile | eines physikalischen Treibmittels (Dichlormethan) |
| 64,2 Teile | Isocyanat (Toluylendiisocyanat T80) (80% 2,4-Isomer, 20% 2,6-Isomer) |
| Variabel | Schaumstabilisator |

* TEGOAMIN®33, erhältlich bei der Firma Evonik Goldschmidt GmbH, hierbei handelt es sich um eine 33%ige Lösung von Triethylendiamin in Dipropylenglykol

** KOSMOSO29, erhältlich bei der Firma Evonik Goldschmidt GmbH, hierbei handelt es sich um das Zinn-II-Salz der Ethylhexansäure.

Hierbei wurde einmal der erfindungsgemäße Schaumstabilisator nach Beispiel 8 eingesetzt. Als Referenz dient

ein konventioneller SiOC-Schaumstabilisator (nicht erfindungsgemäßes Vergleichsbeispiel).

Die hergestellten Schäume wurden anhand folgender physikalischer Eigenschaften beurteilt:

- Rücksacken des Schaumstoffes nach dem Ende der Steigphase (=Rückfall) .
- Raumgewicht (RG)
- Die Luftdurchlässigkeit des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.

Es wurden die in Tabelle 16 zusammengestellten Ergebnisse erhalten.

Tabelle 16: Ergebnisse zu Beispiel 15 (Weichblockschaum)

| Stabilisator | Teile Stabilisator | Rückfall [cm] | Raum-gewicht [kg/m$^3$] | Porosität [mm Wasser-säule] |
|---|---|---|---|---|
| Gem. Bsp. 8 | 0,8<br>0,6 | -1,3<br>-1,7 | 18,4<br>18,7 | 11<br>9 |
| TEGOSTAB BF 2270 | 0,8<br>0,6 | -1,0<br>-1,8 | 18,3<br>18,6 | 34<br>15 |

Die Ergebnisse belegen, dass mit den erfindungsgemäßen Zubereitungen Polyurethan-Weichschaumstoffe hergestellt werden können. Es zeigt sich, dass der erfindungsgemäße Stabilisator ein breites Verarbeitungsspiel aufweist. Während beim Referenzstabilisator eine Erhöhung der Stabilisatormenge eine Erhöhung des Staudruckes zur Folge hat, bleibt die Porosität des erfindungsgemäßen Stabilisators innerhalb der allgemeinen Schwankungen konstant.

## Patentansprüche

1. Zusammensetzung enthaltend Verbindungen der Formel (I)

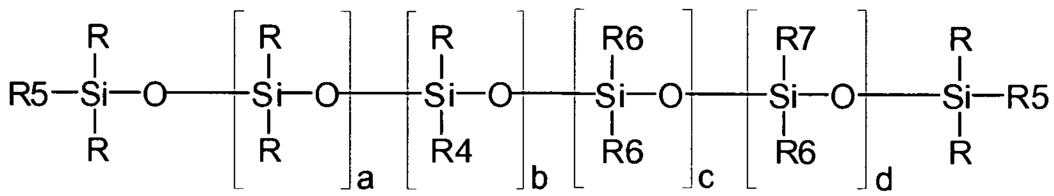

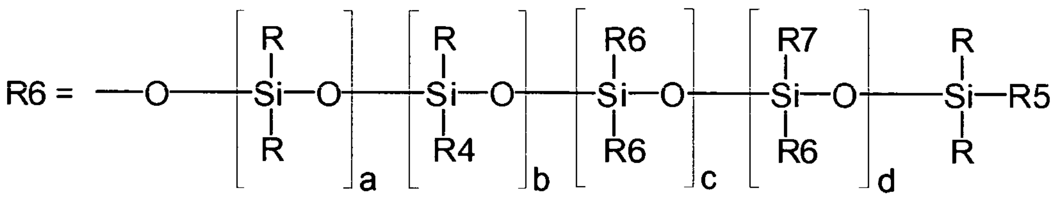

(I)

worin

a unabhängig voneinander 0 bis 500 ist,
b unabhängig voneinander 0 bis 60 ist,
c unabhängig voneinander 0 bis 10,
d unabhängig voneinander 0 bis 10,

mit der Maßgabe, dass pro Molekül der Formel (I) $\Sigma c + \Sigma d >= 1$ und dass die mittlere Anzahl $\Sigma d$ der T-Einheiten

und die mittlere Anzahl Σc der Q-Einheiten pro Molekül jeweils nicht größer als 50, die mittlere Anzahl Σa der D-Einheiten pro Molekül nicht größer als 2000 und die mittlere Anzahl Σb der R4 tragenden Siloxy-Einheiten pro Molekül nicht größer als 100 ist,

R mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen,
R5 unabhängig voneinander R4, -OR8 oder R ist,
R4 unabhängig voneinander -OR8 oder ein organischer Rest ungleich R ist,
R7 R, R4, -OR8 und/oder ein mit Heteroatomen substituierter, funktioneller, organischer, gesättigter oder ungesättigter Rest ausgesucht aus der Gruppe der Alkyl-, Chloralkyl-, Chloraryl-, Fluoralkyl-, Cyanoalkyl-, Acryloxyaryl-, Acryl- oxyalkyl-, Methacryloxyalkyl-, Methacryloxypropyl- oder Vinyl-Rest sein kann,
R8 unabhängig voneinander Wasserstoff oder ein Alkylrest mit 1 bis 10 Kohlenstoffatomen,

mit der Maßgabe, dass mindestens ein Substituent aus R4, R5 und R7 nicht R ist und zumindest eine Verbindung der Formel (I) enthalten ist, bei der mindestens einer der Reste R4, R5 oder R7 ein Rest -OR8 ist und gemittelt über alle in der Zusammensetzung enthaltenen Verbindungen der Formel (I) höchstens 20 mol% der Reste R4, R5 oder R7 gleich -OR8 sind.

2. Zusammensetzung nach Anspruch 1, **dadurch gekennzeichnet, dass** gemittelt über alle in der Zusammensetzung enthaltenen Verbindungen der Formel (I) 0,1 bis 10 mol% der Reste R4, R5 oder R7 vom Typ -OR8 sind.

3. Zusammensetzungen nach Anspruch 1 oder 2, enthaltend weitere Additive, ausgewählt aus konventionellen SiOC- und SiC-Stabilisatoren, organischen Schaumstabilisatoren, Tensiden, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren, Polyolen, und/oder Puffersubstanzen.

4. Zusammensetzungen nach zumindest einem der Ansprüche 1 bis 3, **dadurch gekennzeichnet, dass** es ein Lösungsmittel, ausgewählt aus Glykolen, Alkoxylaten oder Ölen synthetischer und/oder natürlicher Herkunft enthält.

5. Zusammensetzungen nach zumindest einem der Ansprüche 1 bis 4, **dadurch gekennzeichnet, dass** die Reste R4 unabhängig voneinander ausgewählt sind aus
-OR8
$-CH_2-CH_2-CH_2-O-(CH_2-CH_2O-)_x-(CH_2-CH(R')O-)_y-R''$
$-CH_2-CH_2-O-(CH_2-CH_2O-)_x-(CH_2-CH(R')O-)_y-R''$
$-CH_2-R^{IV}$
$-CH_2-CH_2-(O)_{x'}-R^{IV}$
$-CH_2-CH_2-CH_2-O-CH_2-CH(OH)-CH_2OH$

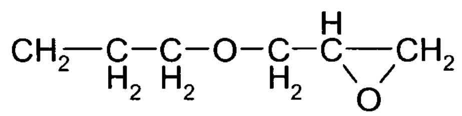

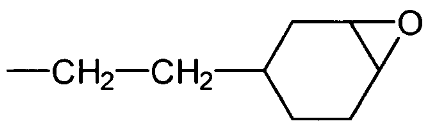

und
$-CH_2-CH_2-CH_2-O-CH_2-C(CH_2OH)_2-CH_2-CH_3$, worin

x 0 bis 100,
x' 0 oder 1,
y 0 bis 100,
R' unabhängig von einander eine gegebenenfalls substituierte Alkyl- oder Arylgruppe mit 1 bis 12 C- Atomen

ist, wobei innerhalb eines Restes R4 und/oder eines Moleküls der Formel I untereinander verschiedene Substituenten R' vorliegen können, und
R" unabhängig voneinander ein Wasserstoffrest oder eine Alkylgruppe mit 1 bis 4 C-Atomen, eine Gruppe -C(O)- R"' mit R"' = Alkylrest, eine Gruppe $-CH_2-O-R'$, eine Alkylarylgruppe, die Gruppe -C(O)NH-R' bedeutet,
$R^{IV}$ ein linearer, cyclischer oder verzweigter, gegebenenfalls substituierter Kohlenwasserstoffrest mit 1 bis 50C-Atomen ist.

**6.** Verwendung von Zusammensetzungen gemäß einem der Ansprüche 1 bis 5 in Polyurethanen.

**7.** Verwendung gemäß Anspruch 6, **dadurch gekennzeichnet, dass** die Zusammensetzung als Schaumstabilisator in Polyurethanschäumen verwendet wird.

**8.** Verwendung gemäß Anspruch 6 oder 7, **dadurch gekennzeichnet, dass** das Polyurethan ein Polyurethanschaum ausgewählt aus Polyurethanhartschaum, Polyurethanweichschaum, viskoelastischem Schaum, HR-Schaum, halbhartem Polyurethanschaum, thermoverformbarem Polyurethanschaum und Integralschaum ist.

**9.** Verfahren zur Herstellung von Polyurethanschaum, **dadurch gekennzeichnet, dass** eine Zusammensetzung gemäß zumindest einem der Ansprüche 1 bis 5 eingesetzt wird.

**10.** Verfahren nach Anspruch 9, **dadurch gekennzeichnet, dass** soviel der Zusammensetzung zugegeben wird, dass der Massenanteil an Verbindungen der Formel (I) am fertigen Polyurethanschaum von 0,01 bis 10 Gew.-% beträgt.

**11.** Verfahren nach Anspruch 9 oder 10, **dadurch gekennzeichnet, dass** zumindest ein Treibmittel ausgewählt aus Wasser, Methylenchlorid, Pentan, Alkanen, halogenierten Alkanen, Aceton und Kohlendioxid eingesetzt wird.

**12.** Polyurethanschaum, **dadurch gekennzeichnet, dass** er eine Zusammensetzung gemäß zumindest einem der Ansprüche 1 bis 5 enthält.

**13.** Polyurethanschaum gemäß Anspruch 12, **dadurch gekennzeichnet, dass** der Massenanteil an Verbindungen der Formel (I) am fertigen Polyurethanschaum von 0,01 bis 10 Gew.-% beträgt.

**14.** Polyurethanschaum nach Anspruch 12 oder 13, **dadurch gekennzeichnet, dass** der Polyurethanschaum ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum ist.

**15.** Verwendung von Polyurethanschäumen gemäß zumindest einem der Ansprüche 12 bis 14 als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte.

## Claims

**1.** Composition comprising compounds of the formula (I)

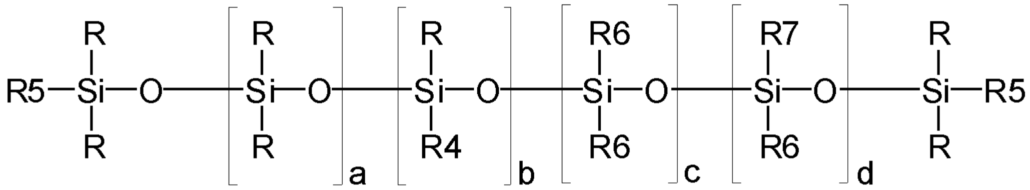

R6 = 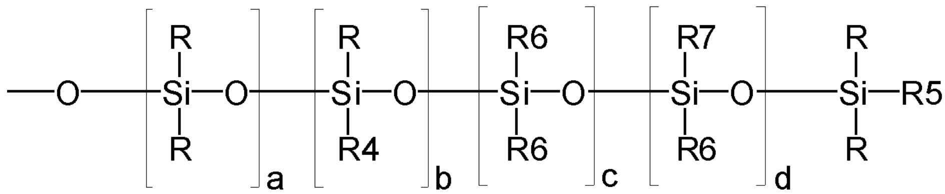

(I)

where
the indices a are each, independently of one another, from 0 to 500,
the indices b are each, independently of one another, from 0 to 60,
the indices c are each, independently of one another, from 0 to 10,
the indices d are each, independently of one another, from 0 to 10,
with the proviso that Σc + Σd >= 1 per molecule of the formula (I) and that the average number Σd of the T units and the average number Σc of the Q units per molecule are in each case not greater than 50, the average number Σa of the D units per molecule is not greater than 2000 and the average number Σb of the siloxy units bearing R4 per molecule is not greater than 100,
the radicals R are each at least one radical from the group consisting of linear, cyclic or branched, aliphatic or aromatic, saturated or unsaturated hydrocarbon radicals having from 1 to 20 carbon atoms,
the radicals R5 are each, independently of one another, R4, -OR8 or R,
the radicals R4 are each, independently of one another, -OR8 or an organic radical which is not R,
the radicals R7 can each be R, R4, -OR8 and/or a heteroatom-substituted, functional, organic, saturated or unsaturated radical selected from the group consisting of alkyl, chloroalkyl, chloroaryl, fluoroalkyl, cyanoalkyl, acryloxyaryl, acryloxyalkyl, methacryloxyalkyl, methacryloxypropyl and vinyl radicals,
the radicals R8 are each, independently of one another, hydrogen or an alkyl radical having from 1 to 10 carbon atoms, with the proviso that at least one substituent from among R4, R5 and R7 is not R and at least one compound of the formula (I) in which at least one of the radicals R4, R5 and R7 is a radical -OR8 is present and, averaged over all compounds of the formula (I) present in the composition, not more than 20 mol% of the radicals R4, R5 and R7 are -OR8.

2. Composition according to Claim 1, **characterized in that**, averaged over all compounds of the formula (I) present in the composition, from 0.1 to 10 mol% of the radicals R4, R5 and R7 are of the type -OR8.

3. Compositions according to Claim 1 or 2 comprising further additives selected from among conventional SiOC and SiC stabilizers, organic foam stabilizers, surfactants, nucleating agents, cell-refining additives, cell openers, crosslinkers, emulsifiers, flame retardants, antioxidants, antistatics, biocides, colour pastes, solid fillers, amine catalysts, metal catalysts, polyols and/or buffer substances.

4. Compositions according to at least one of Claims 1 to 3, **characterized in that** it contains a solvent selected from among glycols, alkoxylates and oils of synthetic and/or natural origin.

5. Compositions according to at least one of Claims 1 to 4, **characterized in that** the radicals R4 are selected independently from among
-OR8
$-CH_2-CH_2-CH_2-O-(CH_2-CH_2O-)_x-(CH_2-CH(R')O-)_y-R''$
$-CH_2-CH_2-O-(CH_2-CH_2O-)_x-(CH_2-CH(R')O-)_y-R''$

$-CH_2-R^{IV}$
$-CH_2-CH_2-(O)_{x'}-R^{IV}$
$-CH_2-CH_2-CH_2-O-CH_2-CH(OH)-CH_2OH$

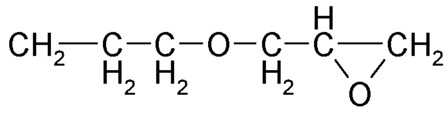

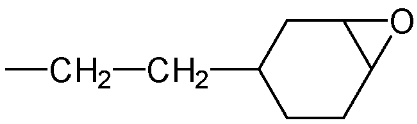

and
$-CH_2-CH_2-CH_2-O-CH_2-C(CH_2OH)_2-CH_2-CH_3$, where
xis from 0 to 100,
x' is 0 or 1,
yis 0 to 100,
the radicals R' are each, independently of one another, an optionally substituted alkyl or aryl group having from 1 to 12 carbon atoms, where different substituents R' can be present within a radical R4 and/or a molecule of the formula I, and
the radicals R"are each, independently of one another, a hydrogen radical or an alkyl group having from 1 to 4 carbon atoms, a group -C(O)-R"' where R"' = alkyl radical, a group $-CH_2-O-R'$, an alkylaryl group, the group -C(O)NH-R',
$R^{IV}$ is a linear, cyclic or branched, optionally substituted hydrocarbon radical having from 1 to 50 carbon atoms.

**6.** Use of compositions according to any of Claims 1 to 5 in polyurethanes.

**7.** Use according to Claim 6, **characterized in that** the composition is used as foam stabilizer in polyurethane foams.

**8.** Use according to Claim 6 or 7, **characterized in that** the polyurethane is a polyurethane foam selected from among rigid polyurethane foam, flexible polyurethane foam, viscoelastic foam, HR foam, semirigid polyurethane foam, thermoformable polyurethane foam and integral foam.

**9.** Process for producing polyurethane foam, **characterized in that** a composition according to at least one of Claims 1 to 5 is used.

**10.** Process according to Claim 9, **characterized in that** the composition is added in such an amount that the proportion by mass of compounds of the formula (I) in the finished polyurethane foam is from 0.01 to 10% by weight.

**11.** Process according to Claim 9 or 10, **characterized in that** at least one blowing agent selected from among water, methylene chloride, pentane, alkanes, halogenated alkanes, acetone and carbon dioxide is used.

**12.** Polyurethane foam, **characterized in that** it contains a composition according to at least one of Claims 1 to 5.

**13.** Polyurethane foam according to Claim 12, **characterized in that** the proportion by mass of compounds of the formula (I) in the finished polyurethane foam is from 0.01 to 10% by weight.

**14.** Polyurethane foam according to Claim 12 or 13, **characterized in that** the polyurethane foam is a rigid polyurethane foam, a flexible polyurethane foam, a viscoelastic foam, an HR foam, a semirigid polyurethane foam, a thermoformable polyurethane foam or an integral foam.

**15.** Use of polyurethane foams according to at least one of Claims 12 to 14 as refrigerator insulation, insulation board,

sandwich element, pipe insulation, spray foam, 1- & 1.5-component pressure-pack foam, imitation wood, modelling foam, packing foam, mattresses, furniture upholstery, automobile seat cushion, headrest, dashboard, automobile interior trim, automobile roof lining, sound absorption material, steering wheel, shoe sole, carpet backing foam, filter foam, sealing foam and adhesives or for producing corresponding products.

## Revendications

**1.** Composition contenant des composés de formule(I)

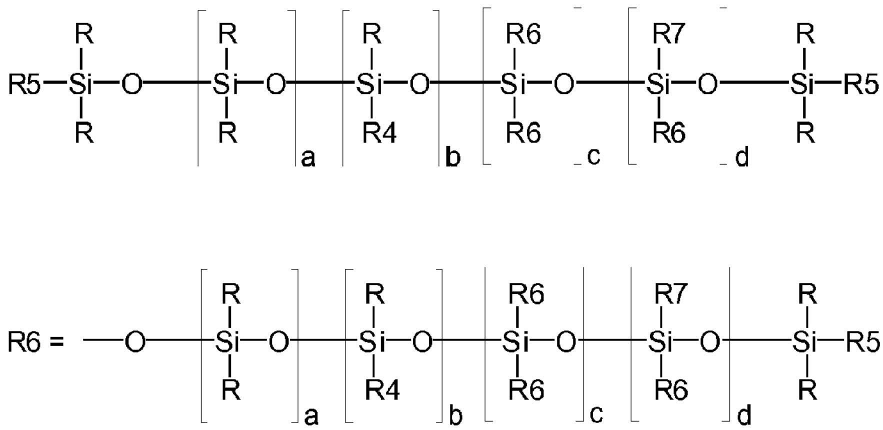

(I)

dans laquelle

a vaut chaque fois indépendamment 0 à 500,
b vaut chaque fois indépendamment 0 à 60,
c vaut chaque fois indépendamment 0 à 10,
d vaut chaque fois indépendamment 0 à 10,

étant entendu que par molécule de formule (I) Σc + Σd >= 1 et que le nombre moyen Σd des motifs T et le nombre moyen Σc des motifs Q par molécule chaque fois n'excède pas 50, le nombre moyen Σa des motifs D par molécule n'excède pas 2 000 et le nombre moyen Σb des motifs siloxy portant R4 par molécule n'excède pas 100,

R est au moins un radical choisi dans le groupe des radicaux hydrocarbonés linéaires, cycliques ou ramifiés, aliphatiques ou aromatiques, saturés ou insaturés, ayant de 1 à 20 atomes de carbone,
R5 est chaque fois indépendamment R4, -OR8 ou R ;
R4 est chaque fois indépendamment -OR8 ou un radical organique différent de R,
R7 peut être R, R4, -OR8 et/ou un radical organique fonctionnel, saturé ou insaturé, substitué par des hétéroatomes, choisi dans le groupe des radicaux alkyle, chloralkyle, chloraryle, fluoroalkyle, cyanoalkyle, acryloxyaryle, acryloxyalkyle, méthacryloxyalkyle, méthacryloxypropyle ou vinyle,
R8 est chaque fois indépendamment un atome d'hydrogène ou un radical alkyle ayant de 1 à 10 atomes de carbone,

étant entendu qu'au moins un substituant parmi R4, R5 et R7 n'est pas R et qu'au moins un composé de formule (I) dans lequel au moins l'un des radicaux R4, R5 ou R7 est un radical -OR8 est contenu et que calculé en moyenne pour tous les composés de formule (I) contenus dans la composition au maximum 20% en moles des radicaux R4, R5 ou R7 représentent -OR8.

**2.** Composition selon la revendication 1, **caractérisée en ce que** calculé en moyenne pour tous les composés de formule (I) contenus dans la composition 0,1 à 10 % en moles des radicaux R4, R5 ou R7 sont du type -OR8.

**3.** Compositions selon la revendication 1 ou 2, contenant d'autres additifs, choisis parmi des stabilisants de SiC et SiOC traditionnels, des stabilisants de mousses organiques, des agents de nucléation, des additifs affinant les

cellules, des agents d'ouverture des cellules, des tensioactifs, des agents de réticulation, des émulsifiants, des agents ignifuges, des antioxydants, des agents antistatiques, des biocides, des pâtes colorantes, des charges solides, des catalyseurs aminés, des catalyseurs métalliques, des polyols et/ou des substances tampon.

**4.** Compositions selon au moins l'une des revendications 1 à 3, **caractérisées en ce qu'**elles contiennent un solvant, choisi parmi des glycols, des produits d'alcoxylation ou des huiles d'origine naturelle et/ou synthétique.

**5.** Compositions selon au moins l'une des revendications 1 à 4, **caractérisées en ce que** les radicaux R4 sont choisis, indépendamment les uns des autres, parmi

-OR8

$-CH_2-CH_2-CH_2-O-(CH_2-CH_2O-)_x-(CH_2-CH(R')O-)_y-R''$

$-CH_2-CH_2-O-(CH_2-CH_2O-)_x-(CH_2-CH(R')O-)_y-R''$

$-CH_2-R^{IV}$

$-CH_2-CH_2-(O)_{x'}-R^{IV}$

$-CH_2-CH_2-CH_2-O-CH_2-CH(OH)-CH_2OH$

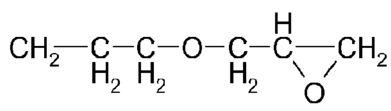

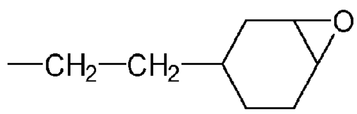

et

$-CH_2-CH_2-CH_2-O-CH_2-C(CH_2OH)_2-CH_2-CH_3$, où

x vaut de 0 à 100,

x' vaut 0 ou 1,

y vaut de 0 à 100,

R' est, chaque fois indépendamment, un groupe alkyle ou aryle éventuellement substitué ayant de 1 à 12 atomes de carbone, des substituants R' différents les uns des autres pouvant être présents à l'intérieur d'un radical R4 et/ou d'une molécule de formule I, et

R'' représente chaque fois indépendamment un atome d'hydrogène ou un groupe alkyle ayant de 1 à 4 atomes de carbone, un groupe -C(O)-R''' où R''' représente un radical alkyle, un groupe $-CH_2-O-R'$, un groupe alkylaryle, le groupe -C(O)NH-R',

$R^{IV}$ est un radical hydrocarboné linéaire, cyclique ou ramifié, éventuellement substitué, ayant de 1 à 50 atomes de carbone.

**6.** Utilisation de compositions selon l'une quelconque des revendications 1 à 5, dans des polyuréthanes.

**7.** Utilisation selon la revendication 6, **caractérisée en ce que** la composition est utilisée comme stabilisant de mousse dans des mousses de polyuréthane.

**8.** Utilisation selon la revendication 6 ou 7, **caractérisée en ce que** le polyuréthane est une mousse de polyuréthane choisie parmi une mousse rigide de polyuréthane, une mousse souple de polyuréthane, une mousse viscoélastique, une mousse HR, une mousse de polyuréthane semi-rigide, une mousse de polyuréthane thermoformable et une mousse intégrale.

**9.** Procédé pour la production de mousse de polyuréthane, **caractérisé en ce qu'**on utilise une composition selon au moins l'une des revendications 1 à 5.

**10.** Procédé selon la revendication 9, **caractérisé en ce qu'**on ajoute une quantité de la composition telle que la

proportion en masse des composés de formule (I) dans la mousse de polyuréthane finale vaille de 0,01 à 10 % en poids.

**11.** Procédé selon la revendication 9 ou 10, **caractérisé en ce qu'**on utilise au moins un agent d'expansion choisi parmi l'eau, le chlorure de méthylène, le pentane, les alcanes, les alcanes halogénés, l'acétone et le dioxyde de carbone.

**12.** Mousse de polyuréthane, **caractérisée en ce qu'**elle contient une composition selon au moins l'une des revendications 1 à 5.

**13.** Mousse de polyuréthane selon la revendication 12, **caractérisée en ce que** la proportion en masse des composés de formule (I) dans la mousse de polyuréthane final vaut de 0,01 à 10% en poids.

**14.** Mousse de polyuréthane selon la revendication 12 ou 13, **caractérisée en ce que** la mousse de polyuréthane est une mousse rigide de polyuréthane, une mousse souple de polyuréthane, une mousse viscoélastique, une mousse HR, une mousse de polyuréthane semi-rigide, une mousse de polyuréthane thermoformable ou une mousse intégrale.

**15.** Utilisation de mousses de polyuréthane selon au moins l'une des revendications 12 à 14, en tant qu'isolation pour réfrigérateurs, plaque isolante, élément en sandwich, isolation de tubes, mousse pulvérisable, mousse en bombe à 1 & 1.5 composants, imitation bois, mousse à modeler, mousse d'emballage, matelas, capitonnage de meubles, rembourrage de sièges d'automobiles, repose-tête, tableau de bord, garniture intérieure d'automobiles, garniture intérieure de toit d'automobile, matériau absorbant les sons, volant, semelles de chaussures, mousse pour dossier de tapis, mousse filtrante, mousse d'étanchéité et colle ou pour la fabrication de produits correspondants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3796676 A
- DE 102008041601
- EP 1439200 A
- EP 1520870 A
- DE 102007055485
- DE 1020070554852